# EUROPÄISCHE PATENTSCHRIFT

(11) **EP 2 810 222 B1**
(45) Veröffentlichungstag und Bekanntmachung des Hinweises auf die Patenterteilung: **01.11.2017**
(21) Anmeldenummer: 13707098.3
(22) Anmeldetag: 30.01.2013
(51) Int. Cl.: G06K 19/077

(54) **RFID-TRANSPONDER MIT EINER SCHLITZANTENNE**
RFID TRANSPONDER HAVING A SLOT ANTENNA
TRANSPONDEUR RFID ÉQUIPÉ D'UNE ANTENNE FENDUE

(30) Priorität: 03.02.2012 DE 102012100903
(43) Veröffentlichungstag der Anmeldung: 10.12.2014
(73) Patentinhaber: Harting IT Software Development GmbH & Co. KG, 32339 Espelkamp (DE)
(72) Erfinder: BENEKEN, Thomas, 58579 Schalksmühle (DE); HEHLGANS, Jörg, 31199 Diekholzen (DE); SCHMIEDING, Dirk, 49152 Bad Essen (DE); TRÖGER, Lutz, 49082 Osnabrück (DE)
(86) Internationale Anmeldenummer: PCT/DE2013/100031
(87) Internationale Veröffentlichungsnummer: WO 2013/113313

(56) Entgegenhaltungen:
- DE-A1-102006 062 308
- US-A1- 2009 021 379

## Beschreibung

Die Erfindung betrifft einen RFID-Transponder, umfassend eine Schlitzantenne und einen RFID-Tag, wobei die Schlitzantenne einen elektrisch leitfähigen Antennenkörper mit einem offenen oder einem geschlossenen Schlitz besitzt, und wobei der RFID-Tag einen RFID-Chip und eine Koppelschleife aufweist.

RFID (Radio Frequency Identification) -Transponder werden für die verschiedensten Anwendungen eingesetzt, insbesondere zum elektronischen Identifizieren von Gegenständen. Im RFID-Transponder können beispielsweise eine Identifikationsnummer sowie weitere Informationen für den entsprechenden Gegenstand gespeichert sein. Mittels eines dazugehörigen Lesegeräts (RFID-Reader) können die Informationen aus dem RFID-Transponder ausgelesen ünd gegebenenfalls auch in ihn hineingeschrieben werden. Passive RFID-Transponder besitzen keine eigene Stromversorgung, werden also über ihre elektromagnetische Kopplung mit dem RFID-Reader elektrisch gespeist und müssen sich üblicherweise sehr nahe am Lesegerät befinden, damit ein Auslesen möglich ist.

### Stand der Technik

Die Druckschrift DE 20 2008 001 549 U1 schlägt dementsprechend einen RFID-Transponder vor, der zum einen über größere Entfernungen ausgelesen werden kann, bei einem UHF-Frequenzbereich von 860 MHz bis 950 MHz insbesondere über Entfernungen von mehr als 1 m, und zum anderen sehr unempfindlich ist gegenüber Umwelteinflüssen.

In dieser Druckschrift wird dazu eine Vorrichtung mit folgenden Merkmalen offenbart: Ein RFID-Transponder mit einem Gehäuse und einer Koppelschleife, die elektrisch mit einem im Gehäuse angeordneten RFID-Chip verbunden ist, und einer Antenne, die einen Schlitz aufweist und an der Außenseite des Gehäuses angeordnet ist. Die extern angeordnete Antenne vergrößert die Entfernung, über die der RFID-Transponder mit einem Lesegerät ausgelesen werden kann. Für den Schlitz können verschiedene geometrische Gestaltungen verwendet werden. Weiterhin wird offenbart, das Gehäuse üblicherweise so anzuordnen, dass es sich von der einen Seite des Schlitzes zur anderen erstreckt. Sämtliche offenbarten Antennenformen sind flächig ausgestaltet und die dazugehörigen Schlitze sind geschlossen ausgeführt.

Die Druckschrift US 2009/0021379 A1 offenbart eine Anordnung, bei der die Koppelschleife in etwa die gleichen Abmessungen, insbesondere die gleiche Länge wie der Schlitz, aufweist, innerhalb des Schlitzes angeordnet ist und dort entlang seiner Ränder verläuft.

Die Druckschrift US 2007/0017986 A1 offenbart eine Vielzahl unterschiedlicher, teilweise auch dreidimensional ausgestalteten Antennenkörper zur elektrischen Ankopplung von Transpondern, wobei diese Transponder keine Koppelschleife aufweisen.

Die Druckschrift DE 10 2007 059 168 A1 schlägt dagegen vor, eine magnetische Koppelantenne zu verwenden, und den RFID-Transponder in einem geometrischen Bereich der Antenne zu positionieren, in dem die Antenne die höchste magnetische Feldstäke aufweist, nämlich an einem der Schlitzenden bzw. nahe daran. Dabei soll die Tatsache ausgenutzt werden, dass in der Mitte eines geschlossenen Schlitzes das elektrische Feld und am Schlitzende das Magnetfeld maximal sei.

Die Druckschrift US 2009/0021379 A1 offenbart eine metallische oder metallisch beschichtete Platte mit einem Schlitz in dem ein RFID-Chip mit einer Koppelschleife angeordnet ist. Insbesondere ist eine Anordnung gezeigt, die so interpretiert werden kann, dass die Koppelschleife nahezu zentral im Schlitz liegt und der Chip an einem offenen Ende des Schlitzes angeordnet ist

Die Druckschrift DE 10 2006 062 308 A1 zeigt ein passives Detektierplättchen, bestehend aus einem Chip und einer Antenne. Die Antenne besteht aus einem elektrisch leitfähigen Antennenkörper mit einer Öffnung, wobei die geometrischen Abmessungen der Öffnung auf eine Sende- und Empfangsfrequenz eines den Chip umfassenden Lesesystems abgestimmt sind. Ein mit dem Chip verbundenes Koppelelement ist an oder in der Öffnung angeordnet. Es wird insbesondere offenbart, dass das Koppelelement als Spule ausgestaltet und mittig oder am Ende der Öffnung angeordnet sein kann.

Im Stand der Technik besteht der Nachteil, dass die Reichweite passiver RFID-Transponder für viele Anwendungen nicht groß genug ist. Es existiert somit ein Bedarf an Bauformen, welche möglichst große Reichweiten ermöglichen.

### Aufgabenstellung

Der Erfindung liegt daher die Aufgabe zugrunde, einen RFID-Transponder der eingangs erwähnten Art dahingehend auszubilden, dass seine Bauform besonders gut zum Erreichen großer Reichweiten geeignet ist.

Diese Aufgabe wird durch den Gegenstand der unabhängigen Ansprüche gelöst.

Vorteilhafte Ausgestaltungen der Erfindung sind in den abhängigen Unteransprüchen angegeben.

Bei der Erfindung handelt es sich um einen RFID-Transponder mit einer Schlitzantenne, der für eine magnetische Kopplung zwischen seinem RFID-Tag und seiner Schlitzantenne optimiert ist. Die wesentliche erfinderische Idee basiert auf der Erkenntnis, dass die gewünscht hohe Reichweite nicht nur durch eine Maximierung der magnetischen Kopplung sondern zusätzlich durch eine gleichzeitige Minimierung der elektrischen Kopplung erreichbar ist. Dies ist sowohl durch eine geeignete Anordnung und Ausrichtung der RFID-Tags am Schlitz eines ebenen Antennenkörpers als auch durch die Anordnung des RFID-Tags innerhalb eines geschlossenen, und somit von elektrischen Feldern der entsprechenden Wellenlängen freien, Hohlraum eines Metallkörpers, z.B. Innenraum eines Rohres oder Vierkantprofils, welches den Antennenkörper bildet, erreicht.

Bezüglich des dritten Aspekts der Erfindung sei angemerkt, dass insbesondere im Bauwesen der Wunsch existiert einen RFID-Tag mit geringstmöglichem Aufwand mechanisch geschützt beispielsweise an einem Baugerüst oder einem Stahlträger, zu betreiben. Somit liegt ein zusätzlicher Vorteil der Erfindung darin, dass der RFID-Tag mechanisch geschützt in hohlen metallischen Körpern, wie beispielsweise einem Rohr, einem Vierkantprofil oder einem Kasten, betrieben werden kann.

Bezüglich des zweiten Aspekts der Erfindung, bedeutet das Kennzeichen, das besagt, dass der Schlitz offen ausgeführt ist, dass der Schlitz ein offenes und ein geschlossenes Ende besitzt. Das offene Ende zeichnet sich dadurch aus, dass es sich direkt an einer Begrenzungsfläche des aus einem elektrisch leitfähigen Material bestehenden Antennenkörpers befindet. Mit anderen Worten zeichnet sich das offene Ende dadurch aus, dass es von keinerlei elektrisch leitfähigem Material des Antennenkörpers umgeben ist. Im Gegensatz dazu zeichnet sich das geschlossene Ende dadurch aus, dass es durch das elektrisch leitfähige Material des Antennenkörpers begrenzt ist.

Somit kann an dem geschlossenen Ende des offenen Schlitzes elektrischer Strom fließen, während an seinem offenen Ende kein elektrischer Strom fließen kann. Die Länge des offenen Schlitzes definiert sich als die Entfernung entlang des offenen Schlitzes von seinem geschlossenen Ende zu seinem offenen Ende. Bevorzugt beträgt die Länge des offenen Schlitzes ein ungradzahliges Vielfaches eines Viertels der Wellenlänge λ einer damit übertragenen und/oder darüber empfangenen elektromagnetischen Welle. Insbesondere kann die Länge des offenen Schlitzes gleichzeitig kleiner sein, als eine Wellenlänge λ, kann also ¼ λ oder ¾ λ betragen. Dies hat den baulichen Vorteil, die Schlitzlänge gering zu halten, so dass die Stabilität beispielswiese eines Behälters oder eines Stahlrohrs geringstmöglich beeinträchtigt wird. Auch bietet eine vergleichsweise geringe Schlitzlänge für viele Bauformen den Vorteil, den RFID-Transponder in seinen Abmessungen kompakt zu halten. Weiterhin kann der Schlitz zur Stabilisierung und/oder Abdichtung gegen Schmutz und Feuchtigkeit mit einem dielektrischen Material gefüllt sein.

In der Praxis können durch Randeffekte, verursacht insbesondere durch die Abmessungen, beispielsweise durch die Höhe des Antennenkörpers und die Breite des Schlitzes, auch Abweichungen von diesem Idealwert der Schlitzlänge entstehen. Wenn der RFID-Transponder beispielsweise ein Signal mit einer Trägerfrequenz, die im Frequenzbereich von 860 MHz bis 960 MHz liegt, sendet und empfängt, dann liegt die dazugehörige Wellenlänge λ dementsprechend zwischen 31 cm und 35 cm. Für eine ideale Schlitzlänge des offenen Schlitzes käme dann theoretisch ein erster Resonanzbereich von 7,75 cm bis 8,75 cm in Frage. Durch die Randeffekte liegt der reale Resonanzbereich in Abhängigkeit von der Geometrie, der Schlitzbreite und der Höhe des Antennenkörpers in der Praxis deutlich niedriger, verwirklicht aber dennoch das Resonanzprinzip des offenen Schlitzes. Beispielsweise kann die Länge des offenen Schlitzes für diesen Frequenzbereich zwischen 6,75 cm und 7,75 cm, z.B. bei 7,25 cm liegen: Befindet sich zudem ein dielektrisches Material in dem Schlitz, so verkürzt sich der Schlitz zusätzlich entsprechend der dazugehörigen Dielektrizitätskonstanten.

Der RFID-Chip ist an zwei Anschlusspunkten, insbesondere an zwei Anschlusspads, an die Koppelschleife angeschlossen, insbesondere angelötet. Die Koppelschleife des RFID-Tags besitzt eine Hauptachse, die parallel zu einer Verbindungslinie der beiden Anschlusspunkte verläuft. Der RFID-Tag ist vorteilhafterweise dafür vorgesehen, in seiner Orientierung so an dem offenen oder dem geschlossenen Schlitz angeordnet zu werden, dass die Hauptachse der Koppelschleife im Falle eines geradlinigen Schlitzes parallel zum Schlitz oder im Falle eines an der Position des RFID-Tags stetig gekrümmten Schlitzes tangential zum Schlitz verläuft. Mit anderen Worten sind die beiden Anschlusspunkte gegen einander nur in Richtung der Hauptachse und in der erfindungsgemäßen Anordnung im Wesentlichen, d.h. von minimalen, fertigungs- oder montagebedingten Ungenauigkeiten abgesehen, bevorzugt nur in Schlitzrichtung gegeneinander versetzt angeordnet.

Weiterhin weist die Koppelschleife senkrecht zur Hauptachse eine Mittelachse auf. Die Koppelschleife besitzt zwei einander gegenüberliegende seitliche Begrenzungen, die sich jeweils dadurch auszeichnen, dass die Koppelschleife von diesen seitlichen Begrenzungen zur Mittelachse jeweils den größtmöglichen Abstand d besitzt, und wobei sich die Mittelachse dadurch auszeichnet, dass sie mittig zwischen den seitlichen Begrenzungen angeordnet ist, d.h. zu den beiden seitlichen Begrenzungen jeweils denselben Abstand d aufweist. In Richtung ihrer Hauptachse ergibt sich die Länge der Koppelschleife dann aus dem doppelten Abstand d als L_{Koppelschleife} = 2 d.

Unter dem Begriff "mittlerer Bereich des offenen Schlitzes" ist ein Bereich des offenen Schlitzes zu verstehen, der sich zwischen einer ersten Position und einer zweiten Position an diesem Schlitz befindet, wobei die Entfernung der ersten Position zum geschlossenen Ende des offenen Schlitzes entlang des Schlitzes mindestens 1/4 der Länge des offenen Schlitzes beträgt und die Entfernung der zweiten Position zum offenen Ende des offenen Schlitzes entlang des Schlitzes mindestens 1/4 der Länge des offenen Schlitzes beträgt. Die Länge des mittleren Bereiches beträgt dann maximal die Hälfte der Länge des offenen Schlitzes.

Bevorzugt beträgt die Entfernung der ersten Position zum geschlossenen Ende des offenen Schlitzes entlang des Schlitzes mindestens 3/8 der Länge des offenen Schlitzes und die Entfernung der zweiten Position zum offenen Ende des offenen Schlitzes entlang des Schlitzes beträgt mindestens 3/8 der Länge des offenen Schlitzes. Die Länge des mittleren Bereiches beträgt damit maximal ein Viertel der Länge des offenen Schlitzes.

Besonders bevorzugt beträgt die Entfernung der ersten Position zum geschlossenen Ende des offenen Schlitzes entlang des Schlitzes mindestens 7/16 der Länge des offenen Schlitzes und die Entfernung der zweiten Position zum offenen Ende des offenen Schlitzes beträgt entlang des Schlitzes mindestens 7/16 der Länge des offenen Schlitzes. Die Länge des mittleren Bereiches beträgt damit maximal ein Achtel der Länge des offenen Schlitzes.

Sehr besonders bevorzugt beträgt die Entfernung der ersten Position zum geschlossenen Ende des offenen Schlitzes entlang des Schlitzes mindestens 15/32 der Länge des offenen Schlitzes und die Entfernung der zweiten Position zum offenen Ende des offenen Schlitzes entlang des Schlitzes beträgt mindestens 15/32 der Länge des offenen Schlitzes. Die Länge des mittleren Bereiches beträgt damit maximal ein Sechzehntel der gesamten Länge des offenen Schlitzes.

Beispielsweise kann der RFID-Tag mit der Mittelachse seiner Koppelschleife genau an der Mitte des offenen Schlitzes angeordnet sein.

Bezüglich des ersten Aspekts der Erfindung bedeutet das Kennzeichen, dass der Schlitz geschlossenen ausgeführt" ist, dass der Schlitz zwei Enden besitzt, die beide geschlossen sind. Die beiden geschlossenen Enden des geschlossenen Schlitzes zeichnen sich dadurch aus, dass sie jeweils durch elektrisch leitfähiges Material des Antennenkörpers begrenzt sind. Somit kann an den beiden geschlossenen Enden des geschlossenen Schlitzes elektrischer Strom fließen. Die Länge des geschlossenen Schlitzes definiert sich demnach als die Entfernung zwischen diesen beiden geschlossenen Enden entlang des geschlossenen Schlitzes.

Im Idealfall beträgt die Länge des geschlossenen Schlitzes ein ganzzahliges Vielfaches der halben Wellenlänge λ einer damit übertragenen oder darüber empfangenen elektromagnetischen Welle. Insbesondere kann die Länge des offenen Schlitzes zudem auch kleiner oder gleich einer Wellenlänge λ sein, also ½ λ oder λ, bevorzugt ½ λ, betragen. Dies hat den baulichen Vorteil, die Schlitzlänge gering zu halten, so dass die mechanische Stabilität des Antennenkörpers, beispielswiese eines Behälters eines Stahlrohrs oder eines Mehrkantprofils, beispielsweise eines Vierkantprofils oder dergleichen, geringstmöglich beeinträchtigt wird. Auch bietet eine vergleichsweise geringe Schlitzlänge für viele Bauformen den Vorteil, den RFID-Transponder in seinen Abmessungen kompakt zu halten. Außerdem besitzt ein möglichst kurzer Schlitz in vielen Ausführungen ganz offensichtlich den Vorteil der kompakten Bauform der Schlitzantenne und somit des RFID-Transponders.

Weiterhin kann der Schlitz zur Stabilisierung und/oder Abdichtung gegen Schmutz und Feuchtigkeit mit einem dielektrischen Material gefüllt sein.

In der Praxis können durch die Abmessungen, beispielsweise durch die Höhe des Antennenkörpers und die Breite des Schlitzes Abweichungen von dem Idealwert der Schlitzlänge entstehen. Wenn der RFID-Transponder beispielsweise im Frequenzbereich von 860 bis 960 MHz sendet und/oder empfängt, liegt die dazugehörige Wellenlänge λ dementsprechend zwischen 31 cm und 35 cm. Für eine ideale Schlitzlänge des geschlossenen Schlitzes käme dann theoretisch ein erster Resonanzbereich von beispielsweise 15,5 cm bis 17,5 cm in Frage. Durch die Randeffekte liegt der reale Resonanzbereich beispielsweise in Abhängigkeit von der Geometrie, der Schlitzbreite und der Höhe des Antennenkörpers in der Praxis deutlich niedriger, verwirklicht aber dennoch das Resonanzprinzip des geschlossenen Schlitzes. Beispielsweise kann die Länge des geschlossenen Schlitzes für diesen Frequenzbereich zwischen 13,5 und 15,5 cm, also z.B. bei 14,5 cm liegen. Befindet sich zudem ein dielektrisches Material in dem Schlitz, so verkürzt sich die Länge des Schlitzes zusätzlich entsprechend der dazugehörigen Dielektrizitätskonstanten.

Weiterhin ist der RFID-Tag mit der Mittelachse seiner Koppelschleife an einem seitlichen Bereich des geschlossenen Schlitzes angeordnet. Unter dem Begriff "seitlicher Bereich des geschlossenen Schlitzes" ist ein Bereich des geschlossenen Schlitzes zu verstehen, der sich zwischen einer dritten Position und einer vierten Position an dem geschlossenen Schlitz befindet, wobei die Entfernung der dritten Position zu einem der geschlossenen Enden entlang des Schlitzes mindestens 1/8 der Länge des geschlossenen Schlitzes beträgt und die Entfernung der vierten Position zu demselben geschlossenen Ende des Schlitzes entlang des Schlitzes maximal 3/8 der Länge des geschlossenen Schlitzes beträgt. Vom jeweils anderen geschlossenen Ende aus betrachtet ist die vierte Position demnach mindestens 5/8 der Länge des geschlossenen Schlitzes entfernt und die dritte Position ist entlang des geschlossenen Schlitzes maximal 7/8 der Länge des geschlossenen Schlitzes entfernt. Dementsprechend besitzt der geschlossene Schlitz zwei seitliche Bereiche, in denen besonders vorteilhafte Empfangsvoraussetzungen für die magnetische Kopplung des RFID-Tags existieren. Die Länge jedes dieser seitlichen Bereiche beträgt jeweils maximal ein Viertel der Länge des geschlossenen Schlitzes.

Bevorzugt beträgt die Entfernung der dritten Position zu einem der geschlossenen Enden des geschlossenen Schlitzes entlang des Schlitzes mindestens 3/16 der Länge des geschlossenen Schlitzes und die Entfernung der vierten Position zu diesem geschlossenen Ende des geschlossenen Schlitzes entlang des Schlitzes beträgt maximal 5/16 der Länge des geschlossenen Schlitzes. Die Länge des jeweiligen seitlichen Bereiches beträgt dann jeweils maximal ein Achtel der Länge des geschlossenen Schlitzes.

In einer besonders bevorzugten Ausgestaltung beträgt die Entfernung der dritten Position zu einem der geschlossenen Enden des geschlossenen Schlitzes entlang des Schlitzes mindestens 7/32 der Länge des geschlossenen Schlitzes und die Entfernung der vierten Position demselben geschlossenen Ende des Schlitzes beträgt entlang des Schlitzes maximal 9/32 der Länge des geschlossenen Schlitzes. Die Länge jedes seitlichen Bereiches beträgt dann jeweils maximal ein Sechzehntel der Länge des geschlossenen Schlitzes.

In einer weiteren besonders vorteilhaften Ausgestaltung beträgt die Entfernung der dritten Position zu einem der geschlossenen Enden des geschlossenen Schlitzes entlang des Schlitzes mindestens 15/64 der Länge des geschlossenen Schlitzes und die Entfernung der vierten Position zum selben geschlossenen Ende des geschlossenen Schlitzes beträgt entlang des Schlitzes maximal 17/64 der Länge des geschlossenen Schlitzes. Die Länge jedes seitlichen Bereiches beträgt dann jeweils maximal ein Zweiunddreißigstel der Länge des geschlossenen Schlitzes.

Beispielsweise kann der RFID-Tag mit der Mittelachse seiner Koppelschleife genau um ein Viertel der Länge des geschlossenen Schlitzes von einem der beiden geschlossenen Enden des geschlossenen Schlitzes entfernt angeordnet sein.

Durch diese Positionierung und Ausrichtung des RFID-Tags an dem Antennenkörper wird der Empfang von magnetischen Feldkomponenten begünstigt und der Empfang elektrischer Feldkomponenten möglichst stark unterdrückt. Dies ist besonders vorteilhaft, weil das elektrische Feld gegenüber dem Magnetfeld phasenverschoben ist. Durch das elektrische Feld können daher insbesondere bei Phasensprüngen eines Modulationssignals Störungen der Kommunikation des RFID-Transponders mit dem RFID-Reader und dadurch auch Reichweitenverluste versursacht werden.

Umgekehrt werden durch die erfindungsgemäße Unterdrückung der elektrischen Feldkomponenten solche durch die Phasenverschiebung verursachte Störungen weitgehend vermieden.

Durch die Positionierung des RFID-Tags in dem mittleren Bereich des offenen Schlitzes bzw. in einem der seitlichen Bereiche des geschlossenen Schlitzes werden dabei auch diejenigen elektrischen Felder unterdrückt, die durch magnetische Randeffekte an den geschlossenen Enden der jeweiligen Schlitze auftreten. Da der elektrische Strom im Antennenkörper am Rande des Schlitzes um den Schlitz herum geführt wird, verlaufen die magnetischen Feldlinien zwar über den größten Bereich des Schlitzes in einer Ebene rechtwinklig zum Schlitz, weisen jedoch in der Nähe der geschlossenen Enden auch zunehmend Komponenten in Schlitzrichtung auf.

Von Vorteil ist es, dass die Koppelschleife zwei Anschlusspunkte, insbesondere Anschlusspads, zur Kontaktierung des RFID-Tags aufweist und diese Anschlusspunkte zur Unterdrückung der elektrischen Felder ausschließlich in Längsrichtung des Schlitzes zueinander versetzt angeordnet sind, d.h. die Verbindungslinie der Anschlusspunkte parallel zum jeweiligen Schlitz verläuft. Da die elektrischen Feldlinien rechtwinklig zum Schlitz verlaufen, existiert so zwischen diesen Anschlüsspunkten keine elektrische Potentialdifferenz.

Vorteilhafterweise ist die Koppelschleife zum optimalen Empfang des Magnetfelds an diesem Schlitz geeignet ausgebildet und ausgerichtet, besitzt also dieselbe Breite wie der Schlitz und verläuft in Längsrichtung, d.h. in Richtung des Schlitzes größtenteils entlang der Ränder des Schlitzes.

Da durch die Kapazität des an die Koppelschleife angeschlossenen RFID-Chips und durch die Abmessungen der Koppelschleife die Resonanzfrequenz des dadurch entstehenden Schwingkreises festgelegt wird, und da diese Resonanzfrequenz der Wellenlänge λ der elektromagnetischen Welle entsprechen soll, ist es vorteilhaft, die Schlitzbreite, und damit die Breite der Koppelschleife, gemäß der dadurch vorgegebenen Induktivität so zu wählen, dass die Länge der Koppelschleife den folgend genannten Vorgaben entspricht:
Die Länge der Koppelschleife L_{Koppelschleife} soll in Richtung ihrer Hauptachse eine vorgegebene maximale Länge bevorzugt unterschreiten. Schließlich existieren an ihren Enden durch das Abnehmen der Feldstärke entlang des Schlitzes unterschiedlich starke elektrische Felder, die demzufolge auch unterschiedlich stark in die Koppelschleife einkoppeln. Die Auswirkung der Differenz dieser unterschiedlich starken elektrischen Felder soll möglichst minimiert werden. Daher soll die maximale Länge der Koppelschleife für den geschlossenen Schlitz vorteilhafterweise 1/6 der Schlitzlänge, bevorzugt 1/7 der Schlitzlänge, besonders bevorzugt 1/8 der Schlitzlänge, sehr besonders bevorzugt 1/9 der Schlitzlänge und insbesondere 1/10 der Schlitzlänge betragen. Für den offenen Schlitz soll die maximale Länge der Koppelschleife vorteilhafterweise 1/3 der Schlitzlänge, bevorzugt 2/7 der Schlitzlänge, besonders bevorzugt 1/4 der Schlitzlänge, sehr besonders bevorzugt 2/9 der Schlitzlänge und insbesondere 1/5 der Schlitzlänge betragen. Der Begriff "maximale Länge der Koppelschleife" soll dabei bedeuten, dass die Länge der Koppleschleife L_{koppelschleife} jeweils nur Werte annehmen soll, die geringer oder gleich der jeweils angegebenen "maximalen Länge der Koppelschleife" sind. All diese Abmessungen, bei denen also die Länge der Koppelschleife deutlich geringer ist als die Länge des Schlitzes, haben den Vorteil, dass die Koppelschleife entlang des Schlitzes gezielt in Bereichen positioniert werden kann, die so auswählbar sind, dass sie zur magnetischen Kopplung besonders gut geeignet sind. Mit anderen Worten wird durch die vorgenannten Abmessungen die Möglichkeit geschaffen, durch die Positionierung der RFID-Tags am Schlitz die Art der Kopplung, nämlich elektrisch oder magnetisch, einzustellen, wobei sich im vorliegenden Fall für die magnetische Kopplung entschieden wird. Zusätzlich zu Optimierung der magnetischen Kopplung wird die exakte endgültige Positionierung des RFID-Tags am Schlitz zusätzlich auch nach dem Kriterium ausgewählt, dass unter Berücksichtigung vieler theoretisch und messtechnisch ermittelter Randeffekte die kapazitive Kopplung gleichzeitig minimiert wird.

Sind diese Vorgaben, nämlich die der angepassten Resonanzfrequenz und die der geometrischen Abmessungen der Koppelschleife mit einer im Wesentlichen rechteckig ausgeführten Koppelschleife nicht in Einklang zu bringen, so kann die Koppelschleife vorteilhafterweise auch mäanderförmig ausgestaltet sein, um bei den vorgegebenen geometrischen Gesamtabmessungen den Schwingkreis, gebildet aus Koppelschleifeninduktivität und Chipkapazität auf die Resonanzfrequenz, d.h. die Frequenz der elektromagnetischen Welle, welche bevorzugt zwischen 860 MHz und 960 MHZ liegt, abzustimmen.

Besonders vorteilhaft für den Empfang des Magnetfeldes wirkt es sich aus, dass ein im Antennenkörper von der elektromagnetischen Welle, d.h. von deren Anteil in relevanter Polarisationsrichtung, verursachter Strom notwendigerweise um den zur Hauptstromrichtung senkrecht stehenden, den Stromfluss also behindernd ausgerichteten, Schlitz herumgeleitet wird und so an einem ersten Rand des Schlitzes zunächst in eine erste Richtung fließt, an zumindest einem geschlossenen Ende an dem Schlitz senkrecht dazu vorbei fließt und an dem gegenüber liegenden Rand des Schlitzes in einer zur ersten Richtung entgegengesetzten Richtung an einem zweiten Rand des Schlitzes zurückfließt. Durch die beiden zueinander entgegengesetzt gerichteten Stromrichtungen werden an diesen beiden Schlitzrändern auch zueinander entgegengesetzt orientierte Magnetfelder erzeugt. Diese entgegengesetzt orientierten Magnetfelder erzeugen in der geeignet ausgebildeten und ausgerichteten Koppelschleife in der Konsequenz einen gleich gerichteten Stromfluss. Durch die geeignete Positionierung des RFID-Tags in Position und Orientierung wird als Konsequenz davon das endgültige Signal verstärkt und die Reichweite erhöht. Insbesondere die Positionierung der Mittelachse der Koppelschleife im mittleren Bereich des offenen Schlitzes oder im seitlichen Bereich des geschlossenen Schlitzes leistet dazu einen wichtigen Beitrag. An oder in der Nähe der geschlossenen Enden kämen nämlich aufgrund der nicht mehr parallel zum Schlitz verlaufenden Stromrichtung in Form von Randeffekten zunehmend Magnetfeldanteile zum Tragen, welche sich gegenseitig nicht mehr optimal verstärken würden, was insgesamt Pegelverluste und damit Reichweitenverluste zur Folge hätte.

Vorteilhafterweise wird der RFID-Tag in einem Frequenzbereich, welcher zwischen 860 MHz und 960 MHz liegt, betrieben und ist mit seiner Koppelschleife in einem für die magnetische Kopplung besonders gut geeigneten Abstand zum Schlitz der Antenne angebracht ist.

In einer vorteilhaften Ausgestaltung kann der Antennenkörper als ebene Fläche ausgestaltet sein, was bedeutet, dass seine Länge und Breite deutlich größer sind, als seine Höhe. Insbesondere kann es sich bei dem Antennenkörper um ein Blech oder eine leitende Beschichtung einer Leiterplatte handeln. Der Schlitz verläuft dann in einer durch die Länge und die Breite des Antennenkörpers gebildeten Ebene. Ein für die magnetische Kopplung besonders gut geeignete Abstand des RFID-Tags zum Schlitz ist in diesem Fall dadurch gegeben, dass der Abstand zwischen der Koppelschleife des RFID-Tags zu dem Schlitz zwischen 0,5 mm und 2 mm, bevorzugt zwischen 0,7 mm und 1,8 mm, besonders bevorzugt zwischen 0,90 mm und 1,6 mm, insbesondere zwischen 1 mm und 1,5 mm liegt, also beispielsweise 1,25 mm beträgt. Wenn der Schlitz mit einem dielektrischen Material gefüllt ist, so kann eine Anbringung des RFID-Tags an dem Schlitz also bedeuten, dass der RFID-Tag mit seiner Koppelschleife in dem vorgenannten Abstand zum dielektrischen Material an dem Antennenkörper angebracht ist. Insbesondere kann die Koppelschleife größtenteils in dem vorgenannten Abstand zu den Schlitzrändern verlaufen.

In einer anderen vorteilhaften Ausgestaltung kann der Antennenkörper beispielsweise aus einem geraden, gewinkelten und/oder gekrümmten Blech bestehen, das insbesondere zu einem Rohr oder Mehrkantprofil, insbesondere einem Vierkantprofil, gebogen und insbesondere geschlossen ausgeführt sein kann. Dabei bedeutet der Begriff "geschlossen ausgeführt", dass der Antennenkörper in einem rechtwinklig zur Schlitzrichtung verlaufenden Querschnitt eine geschlossene geometrische Form besitzt. Darüber hinaus kann der Antennenkörper auch zu allen Seiten hin verschlossen sein. Insbesondere kann es sich bei dem Antennenkörper auch um eine zu allen Seiten geschlossene Kiste handeln. Um eine Abdichtung gegen Umwelteinflüsse, Staub und Spritzwasser oder sogar eine wasserdichte Abdichtung zu gewährleisten, kann es sinnvoll sein, den Schlitz mechanisch mit einem Dielektrikum zu verschließen, wobei dessen Auswirkungen auf die Schlitzlänge und die elektrischen Resonanzeigenschaften zu berücksichtigen sind. Weiterhin kann der Einsatz eines Dielektrikums von Vorteil sein, weil der optimale Bereich des Sendefrequenz-Spektrum des RFID-Tags durch Anbringung eines Dielektrikums in der Nähe der Koppelschleife in die gesetzlich vorgeschriebenen Frequenzbereiche verschoben werden kann.

Besonders vorteilhaft ist es, den RFID-Tag an einer Innenseite des gekrümmt und/oder gewinkelt ausgeführten Antennenkörpers anzuordnen, und insbesondere, den RFID-Tag innerhalb des Antennenkörpers anzuordnen, falls der Antennenkörper geschlossen ausgeführt ist, weil der RFID-Tag dadurch vor mechanischen Beschädigungen besonders gut geschützt ist. Der Schlitz kann dann beispielsweise geschlossen ausgeführt sein und der RFID-Transponder kann erfindungsgemäß mit der Mittelachse seiner Koppelschleife in einem seitlichen Bereich des geschlossenen Schlitzes angeordnet und mit seiner Hauptachse entlang des Schlitzes ausgerichtet sein. Dadurch ist der RFID-Tag am Schlitz besonders gut zur magnetischen Kopplung angeordnet, was besonders vorteilhaft ist, weil das Magnetfeld das elektrisch leitende Material des Antennenkörpers, insbesondere des Rohres, des Vierkantprofils oder dergleichen, ungehindert durchdringt. Gegenüber einem elektrischen Feld dagegen würde der geschlossene Antennenkörper schirmende Eigenschaften aufweisen und das Rohr, Vierkantprofil oder dergleichen müsste entsprechende Abmessungen, insbesondere einen Mindestdurchmesser der halben Wellenlänge λ einer elektrischen Welle besitzen, damit sich die elektrische Welle darin überhaupt ausbreiten könnte. Eine vergleichbare Restriktion besteht für die magnetische Welle nicht.

Bei einer Anbringung des RFID-Tags innerhalb des geschlossen ausgeführten Antennenkörpers, d.h. im Rohr, Vierkantprofil, Kiste oder dergleichen, ist der für die magnetische Kopplung besonders gut geeignete Abstand des RFID-Tags zum Schlitz dadurch gegeben, dass der Abstand zwischen der Koppelschleife des RFID-Tags und dem Schlitz zwischen 0,1 mm und 1,0 mm, bevorzugt zwischen 0,2 mm und 0,8 mm, besonders bevorzugt zwischen 0,30 mm und 0,70 mm, insbesondere zwischen 0,4 mm und 0,6 mm liegt, also beispielsweise 0,5 mm beträgt. Wenn der Schlitz mit einem dielektrischen Material gefüllt ist, bedeutet eine Anbringung des RFID-Tags an dem Schlitz also, dass der RFID-Tag mit seiner Koppelschleife in dem vorgenannten Abstand zum dielektrischen Material innerhalb des Antennenkörpers an dem Antennenkörper angebracht ist. Insbesondere kann die Koppelschleife größtenteils in dem vorgenannten Abstand zu den Schlitzrändern verlaufen.

Diese für die magnetische Kopplung besonders gut geeigneten Abstände haben gemäß entsprechender Messungen und Erfahrungswerte den Vorteil, dass dadurch besonders hohe Reichweiten des RFID-Transponders, beispielsweise bis zu 14 m, erreicht werden können, mit anderen Worten, dass ein RFID-Reader und der RFID-Transponder über eine besonders große Entfernung von beispielsweise 14 m miteinander kommunizieren können.

Ein weiterer Vorteil besteht darin, dass über die für die magnetische Kopplung besonders gut geeignete Entfernung zwischen der Koppelschleife und dem Schlitz eine optimale Anpassung der Impedanz zwischen dem RFID-Chip und der Schlitzantenne erreicht werden kann. Weiterhin kann die Koppelschleife dadurch insbesondere mit den am Schlitz existierenden magnetischen Feldkomponenten entsprechend gut koppeln, so dass möglichst viel Energie zur Informationsübertragung zwischen der Schlitzantenne und der Koppelschleife übertragen wird.

Ein weiterer Vorteil einer solchen für die magnetische Kopplung besonders gut geeigneten Anordnung des RFID-Transponders am Schlitz der Antenne besteht weiterhin darin, die Kopplung des elektrischen Feldes, das üblicherweise gegenüber dem magnetischen Feld eine Phasenverschiebung von 90° aufweist, möglichst stark zu unterdrücken, da durch diese Phasenverschiebung, insbesondere bei Phasensprüngen eines Modulationssignals, Störungen der Kommunikation des RFID-Transponders mit dem RFID-Reader versursacht werden können.

Somit besteht eine besonders bevorzugte Ausführungsform darin, dass der RFID-Tag an der Schlitzantenne in einer zur magnetischen Kopplung möglichst geeigneten und gleichzeitig zur elektrischen Kopplung möglichst ungeeigneten Position und Orientierung angeordnet ist. In der Praxis werden bei der empirisch ermittelten endgültigen Positionierung also diese beiden Kriterien gemäß aller auftretenden Randbedingungen berücksichtigt.

Es kann sich bei dem Antennenkörper um ein Rohr aus elektrisch leitfähigem Material handeln, das einen bevorzugt geschlossenen Schlitz aufweist. Dabei ist der RFID-Tag innerhalb des Rohres mit seiner Koppelschleife insbesondere an einem der beiden seitlichen Bereiche des geschlossenen Schlitzes angeordnet. Dadurch ist der RFID-Transponder für den Empfang von Magnetfeldern optimiert, was von besonderem Vorteil ist, weil sich im Inneren des Rohres nur dann ein elektrisches Feld aufbauen kann, wenn der Durchmesser des Rohres mindestens die halbe Wellenlänge λ der elektromagnetischen Welle beträgt, während das Magnetfeld das elektrisch leitende Material des Rohres unabhängig von dessen Rohrdurchmesser durchdringt und somit eine magnetische Kopplung auch bei einem innerhalb des Rohres befestigten RFID-Tag möglich ist. Somit trägt die Anbringung des RFID-Tags innerhalb des Rohres sogar zur gewünschten Unterdrückung der elektrischen Feldkomponenten bei. Die Anbringung des RFID-Tags innerhalb des Rohres hat zudem den Vorteil, dass der RFID-Tag mechanisch geschützt ist. Eine solche Anordnung kann beispielsweise im Bauwesen sowie im Gerüstbau eingesetzt werden, wobei der RFID-Tag passiv ausgeführt und fest verbaut sein kann. Der bevorzugt geschlossene Schlitz kann dabei durch ein Dielektrikum mechanisch verschlossen sein. Weitere entsprechende Anwendungen ergeben sich beispielsweise bei der Produktion von Kraftfahrzeugen, wo die elektrisch leitenden Fahrzeugteile den Einsatz von RFID-Transpondern sonst behindern würden. Auch für Züge oder Flugzeuge und im industriellen Umfeld, z.B. an Förderbändern sowie Gestellen, ist ein Einsatz sinnvoll.

In einer vorteilhaften Ausführungsform ist der Antennenkörper flächig ausgestaltet, und ist beispielsweise als Blech oder als leitende Beschichtung einer Leiterplatte als ebene, gebogene oder gekrümmte Fläche ausgeführt.

Allgemein formuliert kann der RFID-Transponder durch die zur Magnetfeldkopplung geeigneten Anordnung seines RFID-Tags am Schlitz auch innerhalb solcher metallumschlossener Hohlräume betrieben werden, deren Geometrie den Aufbau einer elektrischen Welle nicht zulässt. Den Hohlraum bilden nicht nur metallische Rohre, sondern beispielsweise auch metallische Mehrkantprofile, insbesondere Vierkantprofile, und Kisten, welche dabei den Antennenkörper darstellen. Weitere Vorteile dieser Anbringung sind mechanischer Schutz und längere Lebensdauer des RFID-Tags, Schutz vor Diebstahl und Manipulation, ein unverändertes äußeres Erscheinungsbild einer Struktur bzw. eines Produkts sowie eine unveränderte äußere Geometrie.

In einer anderen Ausführung kann es sich bei dem Antennenkörper auch um eine Metallschicht handeln, die auf eine Leiterplatte oder ein anderes Substrat aufgebracht ist, wobei das Substrat gerade, gewinkelt und/oder gekrümmt ausgeführt sein kann. Insbesondere kann es sich bei dem Substrat um ein molded interconnect device (MID) - Bauteil oder um eine Leiterplatte handeln. Beispielsweise kann der RFID-Tag dann auf einer ersten Seite der Leiterplatte oder innerhalb des MID-Bauteils angeordnet sein und die Metallschicht, welche den Antennenkörper bildet, kann auf einer zweiten Seite der Leiterplatte oder außen am MID-Bauteil angeordnet sein. Der Schlitz kann zugunsten geringer geometrischer Abmessungen offen ausgeführt sein und die Leiterplatte oder das MID-Bauteil können ein Dielektrikum bilden. Die komplette Anordnung kann vergossen sein. Dies hat den Vorteil, dass der RFID-Transponder als kompaktes Bauteil ausgeführt sein kann, das nahezu überall frei montierbar und benutzbar ist.

Weitere Vorteile der Erfindung bestehen darin, dass beispielsweise im Automobilbereich in Herstellung, Logistik und Anwendung sowie im Bereich des Flugzeugbaus und Wartung und im Bereich Transportation und Logistik beispielsweise in und an Containern geeignete Metallteile einzelner Bauteile oder Behälter den Einsatz der RFID-Technologie nicht grundsätzlich behindern, sondern die Reichweite gegebenenfalls sogar erhöhen und den RFID-Tag mechanisch schützen können.

Der Schlitz kann in sämtlichen Aspekten der Erfindung und allen dazugehörigen Ausgestaltungen geradlinig oder auch stetig gekrümmt verlaufen. Der Schlitz besitzt zumindest zwei Enden, nämlich ein erstes und ein zweites Ende, wobei eines dieser beiden Enden offen ausgeführt sein kann. Die Schlitzlänge definiert sich jeweils als die Entfernung dieser beiden Enden zueinander entlang des Schlitzes. Weiterhin kann der Schlitz eine gegabelte Form und damit mehr als zwei Enden aufweisen, dann ist jeder Weg von einem Ende.zu einem anderen Ende als eigenständiger Schlitz mit einem ersten und einem zweiten Ende zu betrachten.

### Ausführungsbeispiel

Ein Ausführungsbeispiel der Erfindung ist in der Zeichnung dargestellt und wird im Folgenden näher erläutert. Es zeigen:
Fig.1 eine Schlitzantenne mit einem geschlossenen Schlitz und mit einer einkoppelnden elektrischen Welle in einer relevanten Polarisation;
Fig.2 die Schlitzantenne mit einem dadurch entstehenden elektrischen Stromfluss sowie elektrischen Feldlinien und Magnetfeldlinien;
Fig.2b eine dazugehörige Ausschnittsvergrößerung;
Fig.3 einen RFID-Tag mit einer Koppelschleife und einem RFID-Chip;
Fig.4a die Schlitzantenne mit dem zum Magnetfeldempfang ausgerichteten aber an der Mitte des Schlitzes angeordneten RFID-Tag;
Fig.4b die Schlitzantenne mit einem zum Empfang des elektrischen Feldes geeignet angeordneten und ausgerichteten RFID-Tag;
Fig.5a die Schlitzantenne mit einem zum Magnetfeldempfang geeignet angeordneten und ausgerichteten RFID-Tag;
Fig.5b eine Schlitzantenne mit einem offenem Schlitz und mit einem zum Magnetfeldempfang geeignet ausgerichteten und entlang des Schlitzes in einer dazu geeigneten Position angeordneten RFID-Tag in einer schematischen Darstellung;
Fig.5c eine Schlitzantenne mit einem geschlossenen Schlitz und mit einem RFID-Tag in zwei verschiedenen zum Magnetfeldempfang geeigneten Positionen in einer schematischen Darstellung;
Fig.6a ein Diagramm, darstellend eine Reichweite zwischen einem RFID-Transponder und einem RFID-Reader in Abhängigkeit von der Position des zum Empfang des elektrischen Feldes ausgerichteten RFID-Tags an dem geschlossenen Schlitz;
Fig.6b ein Diagramm, darstellend die Reichweite zwischen dem RFID-Transponder und dem RFID-Reader in Abhängigkeit von der Position des zum Magnetfeldempfang in geeigneter Orientierung ausgerichteten RFID-Tags an dem geschlossenen Schlitz;
Fig.6c ein Diagramm, umfassend die Messkurven aus Fig.6a und 6b;
Fig.6d eine idealisierte Darstellung der Messkurven aus Fig.6c;
Fig. 7 ein Diagramm, darstellend die frequenzabhängige Reichweite des an einem geschlitzten Rohr angeordneten RFID-Tags in drei verschiedenen Orientierungen und Positionen;
Fig. 8a, 9a, 10a die dazugehörigen Anordnungen des RFID-Tags am Rohr;
Fig. 8b, 9b, 10b entsprechende Anordnungen der RFID-Tags an einem geschlossenen Vierkantprofil.

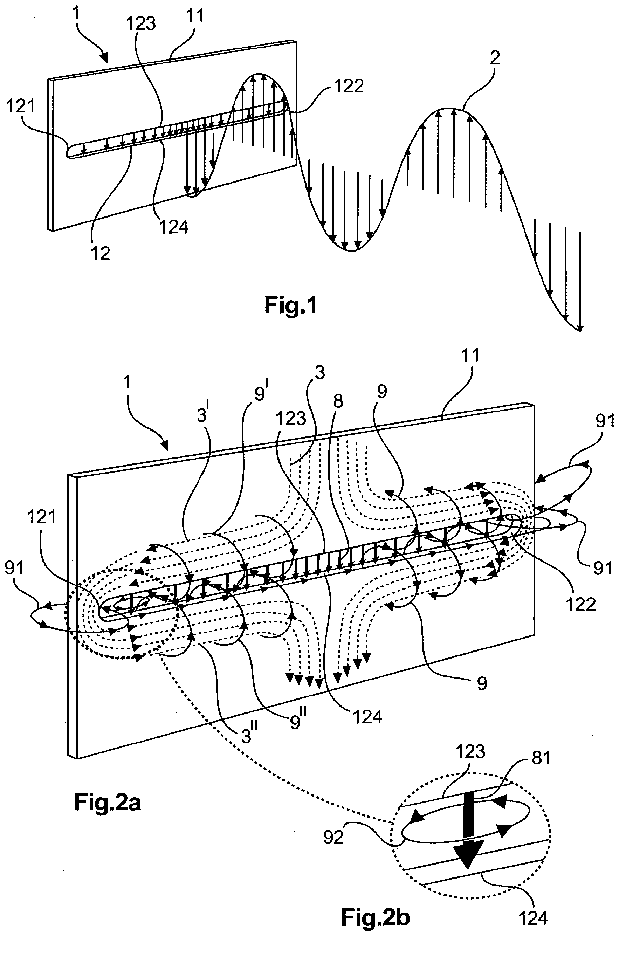

Die Fig.1 zeigt eine Schlitzantenne 1, bestehend aus einem Antennenkörper 11 und einem darin befindlichen geschlossenen Schlitz 12, d.h. einem Schlitz 12, der zwei geschlossene Enden, nämlich ein erstes geschlossenes Ende 121 und ein zweites geschlossenes Ende 122 aufweist, zusammen mit einer einkoppelnden elektrischen Welle 2, d.h. einer elektromagnetischen Welle, wobei nur deren relevante Anteile dargestellt sind, also lediglich die elektrischen Anteile in einer relevanten Polarisationsrichtung, nämlich rechtwinklig zum Verlauf des Schlitzes 12.

In Fig. 2 ist dargestellt, wie durch die elektrische Welle innerhalb des Antennenkörpers 11 ein Stromfluss 3,3',3" verursacht wird. Dabei wird ersichtlich, dass ein im Antennenkörper 11 von der elektrischen Welle 2 verursachter Stromfluss 3 notwendigerweise um den zur Hauptstromrichtung senkrecht stehenden Schlitz 12, welcher den Stromfluss 3 also behindernd ausgerichtet ist, herumgeleitet wird und so an einem ersten Rand 123 des Schlitzes 12 zunächst, dargestellt als Stromfluss 3', in eine erste Richtung fließt, an einem der geschlossenen Enden 121, 122 an dem Schlitz 12 senkrecht dazu vorbei fließt und an einem zweiten Rand 124 des Schlitzes 12 in einer der ersten Richtung entgegengesetzten zweiten Richtung, dargestellt als Stromfluss 3", zurückfließt. Durch den somit längs des Schlitzes 12 ausgerichteten Stromfluss 3',3" entstehen zum einen entsprechende Magnetfelder mit dazugehörigen Magnetfeldlinien 9',9". Zum anderen entstehen bezogen auf die Längsrichtung in der Mitte des Schlitzes 12 besonders starke elektrische Felder, dargestellt durch den geringen Abstand der entsprechenden elektrischen Feldlinien 8. Dabei und im Folgenden soll unter der "Mitte des Schlitzes 12" die Position am Schlitz 12 verstanden werden, die zu seinen Enden 121,122 den gleichen Abstand, nämlich die halbe Schlitzlänge L2 besitzt. Mit anderen Worten liegt die "Mitte des Schlitzes" genau zwischen den Enden 121,122 des Schlitzes 12. Die besonders große Feldstärke des elektrischen Feldes in der Mitte des Schlitzes 12 kann somit dadurch erklärt werden, dass der Strom von einer mittigen Position am ersten Rand 123 des Schlitzes 12 zur mittigen Position am zweiten Rand 124 des Schlitzes 12 um den Schlitz 12 herum einen größtmöglichen Umweg nehmen muss und dass an der Mitte des Schlitzes 12 bedingt durch den elektrischen Widerstand des Antennenkörpers somit eine maximale elektrische Potentialdifferenz auftritt. Durch die beiden zueinander entgegengesetzt gerichteten Stromrichtungen des Stromflusses 3',3" werden zusätzlich zu diesen elektrischen Feldern an den beiden Schlitzrändern 123,124 auch zueinander entgegengesetzt orientierte Magnetfelder mit einander entsprechend entgegengesetzt drehenden Magnetfeldlinien 9',9" erzeugt. Die Magnetfelder nehmen aufgrund des sich vergrößernden Stromes von der mittigen Position längs des geschlossenen Schlitzes 12 zu den jeweiligen Enden 121,122 des geschlossen Schlitzes 12 hin zu, verzeichnen in der Nähe der Enden 121,122 des Schlitzes 12 jedoch erhebliche Randeffekte aufgrund gegenüber den anderen Magnetfeldlinien 9,9',9" schräg oder sogar senkrecht stehender Magnetfeldlinien 91. Weiterhin ist exemplarisch anhand einer einzelnen elektrischen Feldlinie 81 in einer Ausschnittsvergrößerung in Fig.2b dargestellt, dass auch das elektrische Feld, dargestellt durch seine Feldlinie 81, aufgrund seines Wechselfeldcharakters ein weiteres kleines Magnetfeld, dargestellt als Magnetfeldlinie 92, erzeugt, dessen Feldstärke proportional zur entsprechenden elektrischen Feldstärke ist.

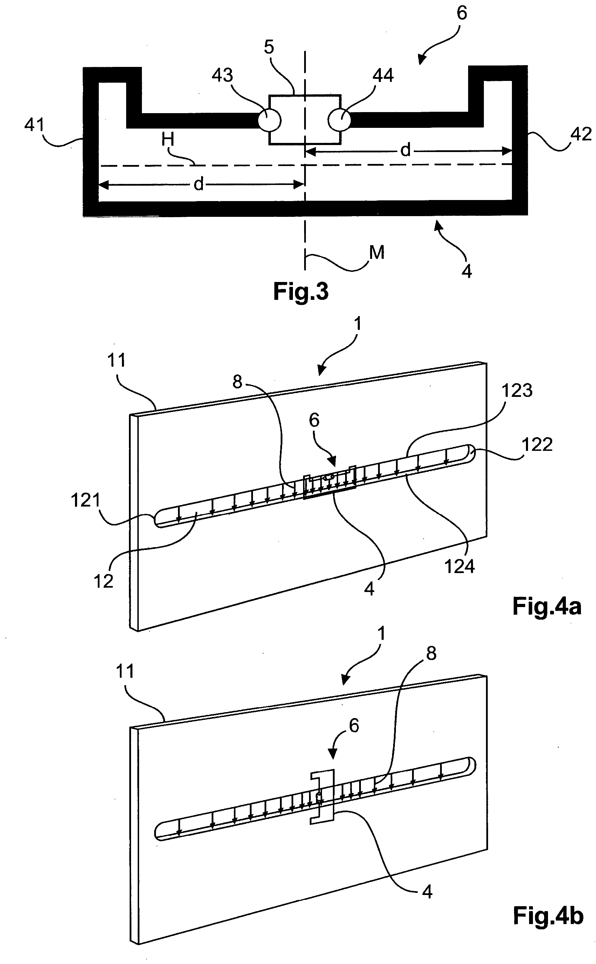

Die Fig.3 stellt einen RFID-Tag 6, umfassend eine Koppelschleife 4 mit einem an zwei dazugehörige Anschlusspads 43,44 angeschlossenen RFID-Chip 5 dar. Diese Koppelschleife 4 kann im Allgemeinen je nach Ausrichtung des RFID-Tags 6 zum Empfang von Magnetfeldern oder zum Empfang von elektrischen Feldern und Magnetfeldern verwendet werden. Erfindungsgemäß ist sie jedoch dafür vorgesehen, ausschließlich zum Empfang von Magnetfeldern ausgerichtet zu werden. Dementsprechend sind die Anschlusspads 43,44 zueinander in Richtung einer Hauptachse H angeordnet, d.h. eine die Anschlusspads 43,44 verbindende Strecke verliefe parallel zur Hauptachse H. Dabei ist der RFID-Tag 6 dafür vorgesehen, an der Schlitzantenne 1 so ausgerichtet zu werden, dass die Hauptachse H parallel zum Schlitz 12 verläuft. Die Koppelschleife 4 weist weiterhin eine Mittelachse M auf, welche sich dadurch auszeichnet, dass sie senkrecht zur Hauptachse H verläuft und zu zwei einander gegenüberliegenden seitlichen Begrenzungen 41,42 der Koppelschleife 4 in einander entgegengesetzten Richtungen jeweils den gleichen Abstand d besitzt, also mittig zwischen den beiden seitlichen Begrenzungen 41,42 der Koppelschleife 4 angeordnet ist. Bei den seitlichen Begrenzungen 41,42 handelt es sich um diejenigen Teile der Koppelschleife 4, welche zur Mittelachse M den jeweils größtmöglichen Abstand d aufweisen. Die Länge der Koppelschleife in Richtung ihrer Hauptachse ergibt sich demnach aus dem doppelten Abstand d als L_{Koppelschleife} = 2 d.

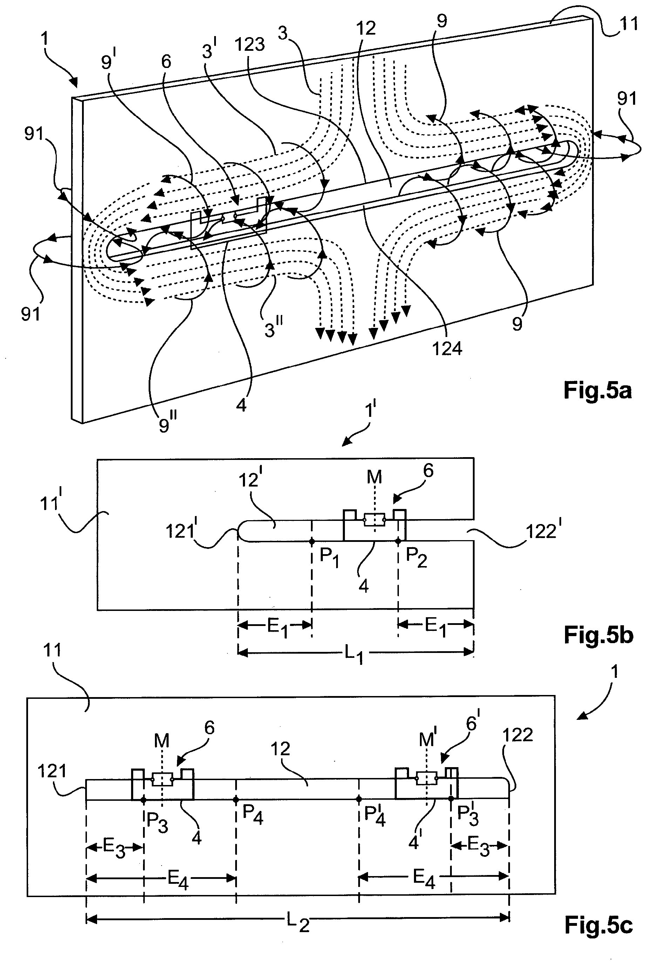

Die Fig.4a stellt den RFID-Transponder mit der Schlitzantenne 1 und dem am geschlossenen Schlitz 12 mittig angeordneten RFID-Tag 6 dar. Dabei ist der RFID-Tag 6 so ausgerichtet, dass die Hauptachse H seiner Koppelschleife 4 in Richtung des Schlitzes 12 verläuft. Die Koppelschleife 4 verläuft größtenteils möglichst nah an den Rändern 123,124 des Schlitzes 12. Längs des Schlitzes 12 befindet sie sich mit ihrer Mittelachse M jedoch in der Mitte des Schlitzes 12, also in einer Position, in der zwar die Feldstärke des elektrischen Felds, repräsentiert durch die Dichte der dazugehörigen Feldlinien 8, maximal ist, jedoch aus Symmetriegründen kein Magnetfeld existiert, da sich die gegeneinander umgekehrt orientierten Magnetfelder beider Schlitzhälften (in der Zeichnung links und rechts von der Mitte des Schlitzes) gegenseitig kompensieren (vergl. Fig.2a und Fig.5a). Auch durch die Abmessungen der Koppelschleife 4, insbesondere durch ihre Länge in Schlitzrichtung, kommt keine Magnetfeldkopplung zustande, da auch die Koppelschleife 4 symmetrisch ausgeführt ist, und die ohnehin geringen magnetischen Einkopplungen beider Schlitzhälften nahe der Schlitzmitte sich in der Koppelschleife 4 gegenseitig kompensieren. Weiterhin sind die Anschlusspads 43,44 zueinander in Richtung der elektrischen Feldlinien 8 nicht gegeneinander versetzt angeordnet und weisen somit zueinander auch keine elektrische Potentialdifferenz auf, wodurch in der Koppelschleife 4 auch durch das elektrische Feld kein elektrischer Stromfluss erzeugt wird. Diese Anordnung ist demnach überhaupt nicht zur Energieübertragung von der Elektromagnetischen Welle 2 an die Koppelschleife 4 geeignet und ist hier der Vollständigkeit halber und hauptsächlich zum besseren Verständnis erwähnt.

Die Fig.4b zeigt den RFID-Transponder mit der Schlitzantenne 1 mit dem ebenfalls mittig am geschlossenen Schlitz 12 angebrachten RFID-Tag 6 in einer Ausrichtung, in der die Koppelschleife 4 auch zum Empfang des elektrischen Feldes geeignet ist, denn hier sind die Anschlusspads 43,44 gegeneinander in Richtung der elektrischen Feldlinien 8 versetzt angeordnet und verzeichnen so als Folge des elektrischen Feldes eine Potentialdifferenz, welche in der Koppelschleife 4 einen Stromfluss verursacht. Diese Anordnung entspricht einer optimalen elektrischen Kopplung und kann als Stand der Technik angesehen werden. Durch die Positionierung des RFID-Tags 6 in der Mitte des geschlossenen Schlitzes 12 ist diese Anordnung jedoch nicht zur magnetischen Kopplung geeignet, weil dort aus den oben genannten Gründen kein Magnetfeld auftritt.

Die Fig.5a zeigt dagegen eine erfindungsgemäße Anordnung, nämlich den RFID-Transponder mit der Schlitzantenne 1 und dem an einem seitlichen Bereich des geschlossenen Schlitzes 12 angeordneten RFID-Tag 6. Dabei ist der RFID-Tag 6 und somit auch die Koppelschleife 4 zur magnetischen Kopplung sowohl geeignet ausgerichtet als auch an einer geeigneten Position in Richtung des Schlitzes 12 angeordnet, nämlich an einer Position, in der ein starkes Magnetfeld, dargestellt durch die Magnetfeldlinien 9,9',9", existiert. In dieser Position machen sich weder Randeffekte des Magnetfeldes, dargestellt durch die demgegenüber schrägen oder sogar rechtwinklig ausgerichteten Magnetfeldlinien 91 an den Enden 121, 122 des Schlitzes 12, bemerkbar, noch sind wesentliche Auslöschungen durch die Magnetfelder der jeweils anderen Schlitzhälfte zu erwarten. Weiterhin ist der Darstellung zu entnehmen, dass der Stromfluss 3',3" an den beiden gegenüberliegenden Schlitzrändern 123,124 in unterschiedliche Richtungen verläuft. Durch die beiden zueinander entgegengesetzt gerichteten Stromrichtungen des Stromflusses 3', 3" werden an diesen beiden Schlitzrändern 123,124 auch zueinander entgegengesetzt orientierte Magnetfelder, dargestellt durch in verschieden drehende Magnetfeldlinien 9', 9", erzeugt. Diese entgegengesetzt orientierten Magnetfelder verlaufen in diesem Bereich im Wesentlichen auch rechtwinklig zu dem Verlauf der Koppelschleife 4 und erzeugen gemeinsam in der geeignet ausgebildeten und ausgerichteten Koppelschleife 4, die also hauptsächlich sehr nah an den Rändern 123,124 des Schlitzes 12 verläuft, einen maximalen gleichgerichteten Strom.

Dementsprechend ist leicht vorstellbar, dass, befände sich die Koppelschleife in einer Position an einem der Enden 121,122 des Schlitzes, also in einer Position, in welcher eine der Begrenzungen 41,42 der Koppelschleife 4 an einem der Enden 121,122 des Schlitzes 12 zu liegen käme, eine solch optimale Verstärkung des gleichgerichteten Stroms in der Koppelschleife 4 aufgrund der Randeffekte, wie sie durch die schrägen Magnetfeldlinien 91 dargestellt sind, nicht in gleichem Maße zustande käme.

Zusätzlich wären in dieser Position an den beiden Begrenzungen 41,42 der Koppelschleife 4 die Feldstärkenunterschiede der elektrischen Wechselfelder, dargestellt durch die elektrischen Feldlinien 8,81, besonders stark. Diese würden gemäß Fig. 2b im Bereich der Enden 121,122 des Schlitzes 12 zu besonders unterschiedlich starken Magnetfeldern führen. Somit würden sich die durch diese Magnetfelder induzierten Ströme in den Begrenzungen 41,42 der Koppelschleife 4 gegenseitig nicht vollständig auslöschen, sondern eine größtmögliche Differenz aufweisen und somit einen maximalen elektrischen Stromfluss in der Koppelschleife 4 erzeugen.

Dies hätte wiederum zur Folge, dass letztlich auch das elektrische Feld im Schlitz 12 in einem entsprechenden Maße von der Koppelschleife empfangen würde. Eine solche Überlagerung mit der magnetischen Kopplung würde sich aufgrund der Phasenverschiebungen zwischen elektrischem Feld und Magnetfeld insbesondere bei Phasensprüngen eines Modulationssignals negativ auf die Signalqualität und damit auf die Reichweite auswirken und ist daher nicht erwünscht.

Im Gegensatz dazu wird durch die geeignete Positionierung des RFID-Tags 6 in Position und Orientierung, wie sie in Fig. 5a dargestellt ist, die Kopplung der Koppelschleife 4 an das elektrische Feld des Schlitzes 12 weitestgehend unterdrückt. Das durch die Magnetfeldkopplung an die Koppelschleife 4 übertragene Signal wird dagegen maximal verstärkt. Es wird statt dessen weitestmöglich eine ausschließliche Magnetfeldkopplung erreicht. Die Reichweite des RFID-Transponders, umfassend Schlitzantenne 1, Koppelschleife 4 und RFID-Chip 5, wird dementsprechend erhöht.

Die Fig.5b zeigt eine schematische Darstellung eines RFID-Transponders mit einer Schlitzantenne 1' mit einem offenen Schlitz 12'. Der offene Schlitz 12' zeichnet sich dadurch aus, dass er ein geschlossenes Ende 121' und ein offenes Ende 122' aufweist. Für den Verlauf der elektrischen und magnetischen Felder am offenen Schlitz 12' gelten im Wesentlichen die oben genannten Gesetzmäßigkeiten einer Hälfte des geschlossenen Schlitzes 12. Die Koppelschleife 4 ist mit ihrer Hauptachse H in Schlitzrichtung ausgerichtet und mit Ihrer Mittelachse M in einem mittleren Bereich des offenen Schlitzes 12' angeordnet. Dieser mittlere Bereich definiert sich durch seine Grenzen, nämlich die Positionen P1 und P2, die von dem geschlossenen Ende 121' bzw. von dem offenen Ende 122' des Schlitzes 12' jeweils um eine erste Entfernung E1 entfernt sind. Die erste Entfernung E1 ist größer als 1/4 der Länge L1 des offenen Schlitzes 12'. Die erste Entfernung E1 ist bevorzugt größer als 3/8 der Länge L1 des offenen Schlitzes 12'. Die erste Entfernung E1 ist besonders bevorzugt größer als 7/16 der Länge L1 des offenen Schlitzes 12'. Die erste Entfernung E1 ist sehr besonders bevorzugt größer als 15/32 der Länge L1 des offenen Schlitzes 12'. Insbesondere kann der RFID-Transponder 6 mit der Mittelachse M seiner Koppelschleife 4 genau in der Mitte des offenen Schlitzes 12' angeordnet sein. Weiterhin wird aus dieser Darstellung deutlich, dass in dieser Ausführung die Länge L_{Koppelschliefe}.der Koppelschleife 4 kleiner ist als 1/3 der Länge L₁ des offenen Schlitzes 12'. Dabei sei auf Fig. 3 und die Definition der dazugehörigen Abmessung L_{Koppel-schliefe} = 2 d hingewiesen.

Die Fig.5c zeigt einen RFID-Transponder in einer schematischen Darstellung mit einer Schlitzantenne 1 mit einem geschlossenen Schlitz 12 und einem daran angeordneten RFID-Tag 6,6' in zwei zum Magnetfeldempfang geeigneten Positionen. Es existieren also für den geschlossenen Schlitz 12 zwei seitliche Bereiche, an denen für die magnetische Kopplung besonders gute Voraussetzungen vorliegen. Der geschlossene Schlitz 12 zeichnet sich dadurch aus, dass er zwei geschlossene Enden 121,122 aufweist. Die Koppelschleife 4,4' des RFID-Tags 6,6' ist mit ihrer jeweiligen Mittelachse M,M' in jeweils einem der beiden seitlichen Bereiche des geschlossenen Schlitzes 12 angeordnet. Jeder der seitlichen Bereiche definiert sich durch seine Grenzen, nämlich die Positionen P3 und P4 sowie P3' und P4', die von jeweils einem der geschlossenen Enden 121,122 des geschlossenen Schlitzes 12 um eine dritte Entfernung E3 bzw. eine vierte Entfernung E4 entfernt sind. Die dritte Entfernung E3 beträgt mindestens 3/16 der Länge L2 des geschlossenen Schlitzes 12 und die vierte Entfernung E4 beträgt maximal 3/8 der Länge L2 des geschlossenen Schlitzes 12. Bevorzugt beträgt die dritte Entfernung E3 mindestens 3/16 der Länge L2 des geschlossenen Schlitzes 12 und die vierte Entfernung E4 beträgt maximal 5/16 der Länge L2 des geschlossenen Schlitzes 12. Besonders bevorzugt beträgt die dritte Entfernung E3 mindestens 7/32 der Länge L2 des geschlossenen Schlitzes 12 und die vierte Entfernung E4 beträgt maximal 9/32 der Länge L2 des geschlossenen Schlitzes 12. Sehr besonders bevorzugt beträgt die dritte Entfernung E3 mindestens 15/64 der Länge L2 des geschlossenen Schlitzes 12 und die vierte Entfernung E4 beträgt maximal 17/64 der Länge L2 des geschlossenen Schlitzes 12. Insbesondere kann der RFID-Tag 6,6' mit der Mittelachse M,M' seiner Koppelschleife 4,4' um genau 1/4 der Länge L2 des geschlossenen Schlitzes 12 von einem der geschlossenen Enden 121,122 entfernt angeordnet sein. Weiterhin wird aus dieser Darstellung deutlich, dass in dieser Ausführung die Länge L_{Koppelschliefe} der Koppelschleife 4,4' kleiner ist als 1/6 der Länge L₂ des geschlossenen Schlitzes 12'. Dabei sei auf Fig. 3 und die Definition der dazugehörigen Abmessung L_{Koppelschliefe} = 2 d hingewiesen.

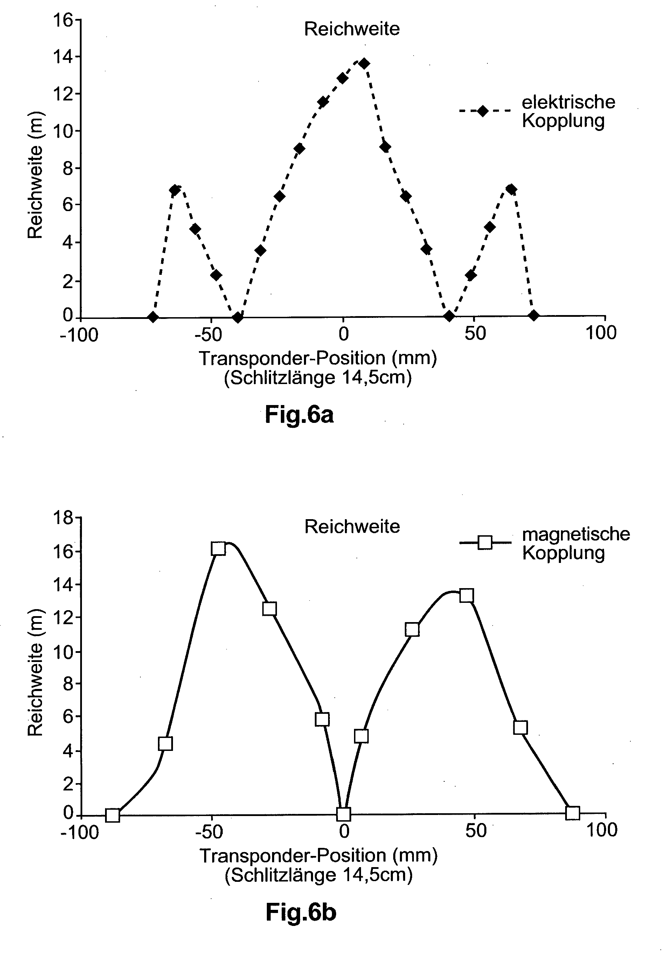

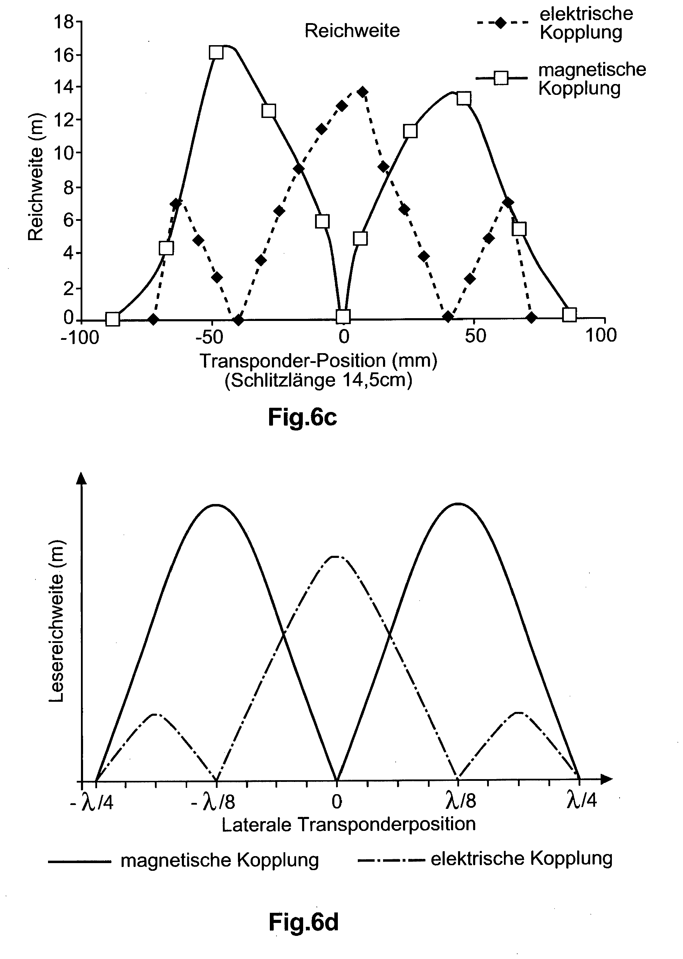

Die Fig. 6a, 6b und 6c stellen die gemessene Reichweite eines solchen RFID-Transponders für unterschiedliche Positionen und Orientierungen des RFID-Tags 6 am geschlossenen Schlitz 12 dar. Dabei wird die Mitte des Schlitzes 12 in der Mitte des Diagramms mit 0 cm bezeichnet. Die Schlitzlänge L2 beträgt 14,5 cm, also zu beiden Seiten der Schlitzmitte 72,5 mm. Besonders deutlich wird dies für die elektrische Kopplung, da das elektrische Feld an den geschlossenen Enden 121,122 des Schlitzes 12 jeweils vollständig verschwindet, da dort eine elektrisch leitende Verbindung existiert, während das Magnetfeld aufgrund der beschriebenen Randeffekte über diese geschlossenen Enden 121,122 hinaus geht. Die Schlitzlänge L2 von 14,5 cm entspricht im Idealfall einer halbe Wellenlänge λ der elektromagnetischen bzw. elektrischen Welle 2. Tatsächlich ist in der Praxis jedoch aufgrund diverser Randeffekte in Abhängigkeit von der Schlitzbreite und -höhe, der Materialstäke und weiteren Materialeigenschaften des Antennenkörpers 11, 11", 11''' davon auszugehen, dass die tatsächliche Wellenlänge λ etwas größer ist als 29 cm, also etwa zwischen 31 cm und 35 cm liegt, und der Frequenzbereich zwischen 860 bis 960 MHz, also den Bereich der international dafür freigegebenen Frequenzen, abdeckt.

Die in Fig. 6a dargestellte Kurve besitzt eine maximale Reichweite von etwa 14 m bei einer mittleren Position des RFID-Tags 6 am Schlitz 12 bei einer Ausrichtung des RFID-Tags 6, bei der die Hauptachse H der Koppelschleife 4 senkrecht zur Richtung des Schlitzes 12 verläuft und bei der die Mittelachse M parallel zur Richtung des Schlitzes verläuft. Diese Ausrichtung lässt auch eine elektrische Kopplung zu. Die Koppelschleife ist also in der Form ausgerichtet, wie es in Fig.4b dargestellt ist. Diese Positionierung und Orientierung kann als konventionell, d.h. als Stand der Technik angesehen werden.

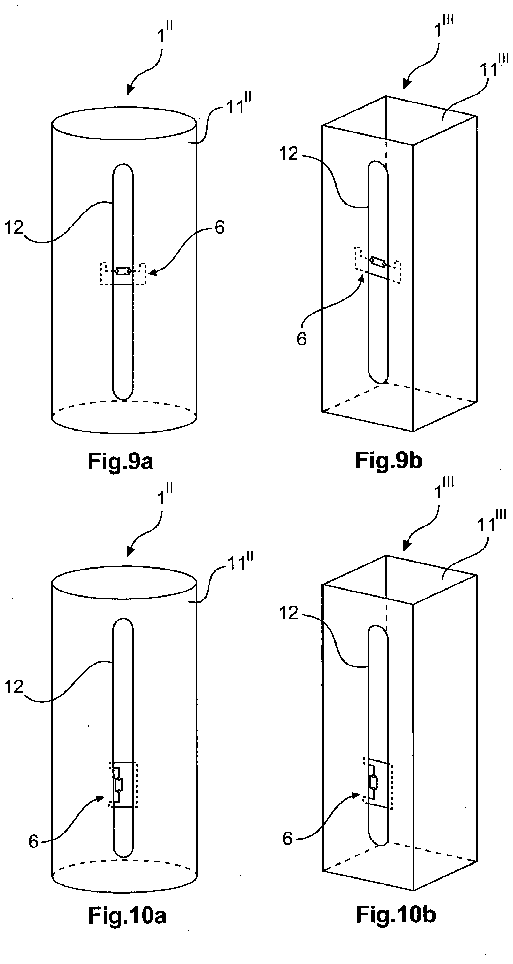

Die in Fig. 6b dargestellte Kurve besitzt eine demgegenüber eine maximale Reichweite von etwa 16 m bei einer Positionierung des RFID-Tags 6 an einem seitlichen Bereich der Schlitzes 12 und in einer Orientierung, bei der die Hauptachse H der Koppelschleife 4 parallel zum Schlitz 12 ausgerichtet ist, und die somit ausschließlich für die Magnetfeldkopplung geeignet ist, also in einer Orientierung der Koppelschleife 4, wie sie in beispielsweise in Fig. 5a und Fig. 5c sowie in Fig. 10a und Fig. 10b dargestellt ist. Zumindest wurde diese maximale Reichweite von 16 m an der ersten Schlitzhälfte erzielt, was eine deutliche Steigerung von 2 m Reichweite gegenüber der konventionellen Anbringung und damit gegenüber dem Stand der Technik darstellt.

In Fig.6c sind zur besseren Vergleichbarkeit beide Kurven gemeinsam eingezeichnet.

Die Fig.6d zeigt eine idealisierte Darstellung dieser Messkurven. Es wird schnell deutlich, dass die rein magnetische Kopplung im Bereich um +/- λ/8, d.h. um ein Viertel der Schlitzlänge L2 vom jeweiligen Ende 121,122 des geschlossenen Schlitzes 12 prinzipiell die größte Reichweite liefert. Dabei wird aus Symmetriegründen davon ausgegangen, dass das wiederholbare Ergebnis der ersten Hälfte des Schlitzes 12 (negativer Wertebereich) prinzipiell auch für die zweite Hälfte des Schlitzes 12 (positiver Wertebereich) erreichbar ist.

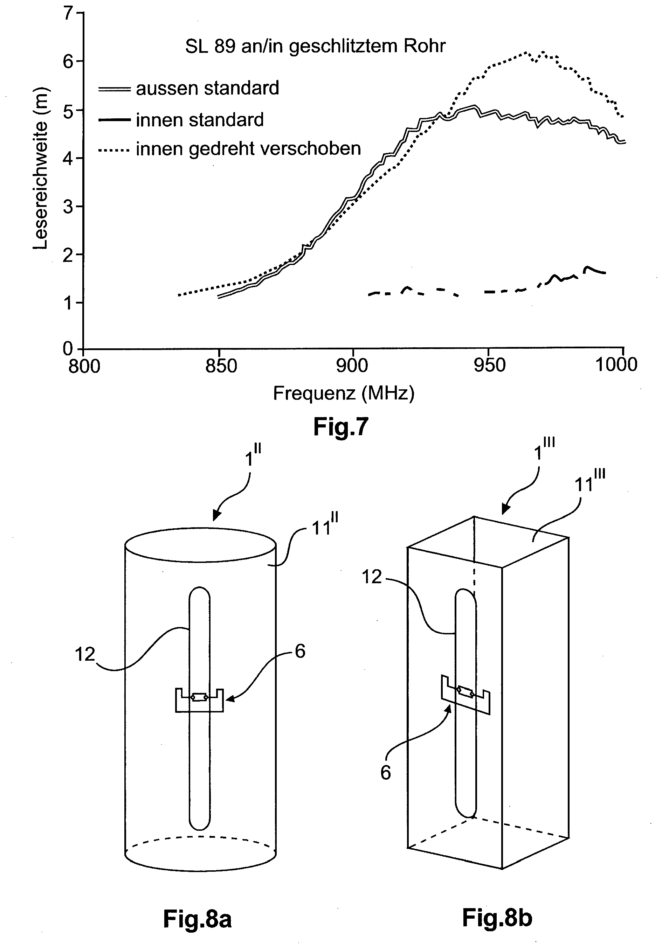

Das Diagramm in Fig.7 stellt eine Reichweite dreier verschiedener RFID-Transponder dar, welche in den Fig.8a, Fig.9a, Fig.10a dargestellt sind.

Die mit einer Doppellinie eingezeichnete Kurve "aussen standard" zeigt die Ergebnisse bei einer konventionellen, elektrischen Kopplung, bei welcher der RFID-Tag 6 von außen in der Mitte des Schlitzes 12 an das Rohr angebracht ist, wie sie in Fig. 8a dargestellt wird. Dabei bildet das Rohr den Antennenkörper 11".

Wird der RFID-Tag 6 in gleicher Schlitzposition und Orientierung, d.h. in einer für die elektrische Kopplung geeigneten Orientierung, aber von innen an das Rohr angebracht, wie es der Darstellung in Fig. 9a entspricht, so ergibt sich die mit "innen Standard" bezeichnete Kurve, die eigentlich durch eine durchgezogene Linie dargestellt sein sollte, deren Messwerte aber keine nennenswerten Ergebnisse lieferten, weil der Rohrdurchmesser kleiner ist als die halbe Wellenlängen λ der elektromagnetischen Welle 2 und somit keine elektrische Welle im Rohr entsteht und somit keine elektrische Kopplung stattfinden kann. Zusätzlich verhindert die Position des RFID-Tags 6 an der Mitte des Schlitzes 12 aus den oben beschriebenen Gründen eine magnetische Kopplung.

Dagegen weist die mit "innen gedreht verschoben" bezeichnete und gepunktet dargestellte Kurve insgesamt die größte Reichweite auf. Zumindest bei hohen Frequenzen, d.h. oberhalb von 935 MHz ist ihre Reichweite der mit "außen Standard" bezeichneten konventionellen Anordnung deutlich überlegen. Unterhalb 935 MHz erreicht sie zumindest eine mit der konventionellen Anordnung vergleichbare Reichweite. Der mit "innen gedreht verschoben" bezeichneten Kurve liegt die zum Magnetfeldempfang geeignete Ausrichtung des RFID-Tags 6 sowie dessen geeignete Positionierung im seitlichen Bereich des geschlossenen Schlitzes 12 und eine Anbringung innerhalb des als Rohr ausgestalteten Antennenkörpers 11" zugrunde, wie sie in Fig.10a dargestellt ist. Für den innerhalb des Rohres angebrachten RFID-Tag 6 ist die Magnetfeldkopplung die einzig sinnvolle Kopplungsmethode, da das Magnetfeld vom elektrisch leitenden Material des Rohres nicht geschirmt wird, das Rohr also ungehindert durchdringt. Das elektrische Feld hingegen könnte sich dagegen nur dann im Rohr ausbreiten, wenn das Rohr einen Durchmesser von mindestens der halben Wellenlänge λ, also mindestens λ/2, im relevanten Frequenzbereich also mindestens 17 cm aufweisen würde, was für die meisten Anwendungen unrealistisch ist. Dadurch ist die elektrische Kopplung bei dieser Anordnung besonders stark unterdrückt.

In den Darstellungen in der Fig.8a und der Fig.8b ist der Antennenkörper 11", 11''' der jeweiligen Schlitzantenne 1", 1''' als Rohr oder Vierkantprofil geschlossen ausgeführt und der RFID-Tag 6 ist an der Außenseite des Antennenkörpers 11", 11''' an der Mitte des Schlitzes 12 angeordnet; in den Darstellungen in den Fig.9a und Fig.9b ist der Antennenkörper 11", 11''' als Rohr oder Vierkantprofil geschlossen ausgeführt und der RFID-Tag 6 ist an der Innenseite, also innerhalb des geschlossenen Antennenkörpers 11", 11''' an der Mitte des Schlitzes 12 angeordnet; und in den Darstellungen in den Fig.10a und Fig.10b ist der Antennenkörper 11", 11''' als Rohr oder Vierkantprofil geschlossen ausgeführt und der RFID-Tag 6 ist an der Innenseite, also innerhalb des geschlossenen Antennenkörpers 11", 11''' an einem der beiden seitlichen Bereiche des Schlitzes 12 angeordnet.

Selbstverständlich kann auch ein geschlossen ausgeführter, also beispielsweise zu einem Rohr oder zu einem Mehrkantprofil gebogener, insbesondere zu einem Vierkantprofil gewinkelter Antennenkörper 11", 11''' einen offenen Schlitz 12' besitzen. Dementsprechend gelten die oben genannten Gesetzmäßigkeiten des offenen Schlitzes 12'.

### Bezugszeichenliste

- 1,1',1",1''': Schlitzantenne
- 11,11',11",11''': Antennenkörper;
- 12,12': geschlossener, offener Schlitz;
- 121,122,121',122': Enden des geschlossenen / offenen Schlitzes;
- 123,124: Ränder des Schlitzes;
- 2: elektrische / elektromagnetische Welle;
- 3, 3',3": Stromfluss;
- 4,4': Koppelschleife;
- 41,42: seitliche Begrenzungen der Koppelschleife;
- 43,44: Anschlusspads;
- 5: RFID-Chip;
- 6,6': RFID-Tag;
- H: Hauptachse der Koppelschleife;
- M,M': Mittelachse der Koppelschleife;
- d: Abstand der seitlichen Begrenzungen zur Mittelachse
- 8,81: elektrische Feldlinien;
- 9,9',9",91,92: Magnetfeldlinien;
- P1,P2: Positionen zur Definition des mittleren Bereichs am offenen Schlitz;
- E1: Entfernung der Positionen P1,P2 zu den jeweiligen Schlitzenden
- P3,P4,P3',P4': Positionen zur Definition des seitlichen Bereichs am geschlossenen Schlitz;
- E3,E4: Entfernung der Positionen P3,P4,P3',P4' zu den jeweiligen Schlitzenden
- L1,L2: Länge des offenen / geschlossenen Schlitzes

## Patentansprüche

1. RFID-Transponder, umfassend eine Schlitzantenne (1) und einen RFID-Tag (6), wobei die Schlitzantenne (1) einen elektrisch leitfähigen Antennenkörper (11, 11", 11''') mit einem geschlossenen Schlitz (12) besitzt, und wobei der RFID-Tag (6) einen RFID-Chip (5) und eine Koppelschleife (4) aufweist, wobei die Koppelschleife (4) zwei Anschlusspunkte zum Anschluss des RFID-Chips (5) vorzieht, und wobei diese beiden Anschlusspunkte zueinander in Richtung der Hauptachse (H) angeordnet sind, und wobei die Hauptachse (H) des RFID-Tags (6) parallel zum Schlitz (12,12') ausgerichtet ist, falls der Schlitz (12,12') an der Position des RFID-Tags (6) gradlinig ausgeführt ist, oder wobei die Hauptachse (H) tangential zum Schlitz (12) ausgerichtet ist, falls der Schlitz (12) an der Position des RFID-Tags (6) stetig gekrümmt ausgeführt ist, und wobei die Koppelschleife senkrecht zur Hauptachse (H) eine Mittelachse (M) aufweist, die mittig zwischen zwei seitlichen Begrenzungen (41,42) der Koppelschleife (4) angeordnet ist, **gekennzeichnet dadurch, dass** die beiden einander gegenüberliegende seitliche Begrenzungen (41,42) der Koppelschleife sich zusätzlich dadurch auszeichnen, dass sie zur Mittelachse (M) jeweils den größtmöglichen Abstand (d) besitzen, wobei der RFID-Tag (6) mit der Mittelachse (M) seiner Koppelschleife (4) an einem seitlichen Bereich des geschlossenen Schlitzes (12) angeordnet ist, wobei sich der besagte seitliche Bereich zwischen einer dritten Position (P3) und einer vierten Position (P4) an dem geschlossenen Schlitz (12) befindet, wobei die Entfernung (E3) der dritten Position (P3) zu einem der geschlossenen Enden (121) entlang des Schlitzes (12) mindestens 3/16 der Länge (L2) des geschlossenen Schlitzes (12) beträgt und wobei die Entfernung (E4) der vierten Position (P4) zu demselben geschlossenen Ende (121) des Schlitzes (12) entlang des Schlitzes (12) maximal 5/16 der Länge (L2) des geschlossenen Schlitzes (12) beträgt.

2. RFID-Transponder gemäß Anspruch 1, wobei die Koppelschleife (4) senkrecht zu ihrer Mittelachse (M) eine Hauptachse (H) und in Richtung dieser Hauptachse (H) eine Länge aufweist, die kleiner oder gleich 1/6 der Länge (L2) des geschlossenen Schlitzes (12) ist.

3. RFID-Transponder, umfassend eine Schlitzantenne (1') und den RFID-Tag (6), wobei die Schlitzantenne einen elektrisch leitfähigen Antennenkörper (11') mit einem offenen Schlitz (12') besitzt, wobei sich der offene Schlitz (12') dadurch auszeichnet, dass er ein offenes (122') und ein geschlossenes (121') Ende aufweist, und wobei der RFID-Tag (6) den RFID-Chip (5) und die Koppelschleife (4) aufweist, wobei die Koppelschleife (4) zwei Anschlusspunkte zum Anschluss des RFID-Chips (5) vorsieht, und wobei diese beiden Anschlusspunkte zueinander in Richtung der Hauptachse (H) angeordnet sind, und wobei die Hauptachse (H) des RFID-Tags (6) parallel zum Schlitz (12,12') ausgerichtet ist, falls der Schlitz (12,12') an der Position des RFID-Tags (6) gradlinig ausgeführt ist, oder wobei die Hauptachse (H) tangential zum Schlitz (12) ausgerichtet ist, falls der Schlitz (12) an der Position des RFID-Tags (6) stetig gekrümmt ausgeführt ist, und wobei die Koppelschleife senkrecht zur Hauptachse (H) eine Mittelachse (M) aufweist, die mittig zwischen zwei seitlichen Begrenzungen (41,42) der Koppelschleife (4) angeordnet ist, **gekennzeichnet dadurch, dass** die beiden einander gegenüberliegende seitliche Begrenzungen (41,42) der Koppelschleife sich zusätzlich dadurch auszeichnen, dass sie zur Mittelachse (M) jeweils den größtmöglichen Abstand (d) besitzen, wobei der RFID-Tag (6) mit der Mittelachse (M) seiner Koppelschleife (4) an einem mittleren Bereich des offenen Schlitzes (12') angeordnet ist, wobei der besagte mittlere Bereich durch seine Grenzen definiert ist, nämlich durch eine erste Position (P1) und eine zweite Position (P2), die von dem geschlossenen Ende (121') bzw. von dem offenen Ende (122') des Schlitzes (12') jeweils um eine erste Entfernung (E1) entfernt sind, wobei diese erste Entfernung (E1) größer ist als 3/8 der Länge (L1) des offenen Schlitzes (12').

4. RFID-Transponder gemäß Anspruch 3, wobei die Koppelschleife (4) in Richtung ihrer zur Mittelachse (M) senkrecht stehenden Hauptachse (H) eine Länge aufweist, die kleiner oder gleich 1/3 der Länge (L1) des offenen Schlitzes (12') ist.

5. RFID-Transponder gemäß einem der vorstehenden Ansprüche, **dadurch gekennzeichnet, dass** der Antennenkörper (11 ", 11''') gewinkelt oder gekrümmt ausgebildet und geschlossen, also beispielsweise als Rohr oder geschlossenes Vierkantprofil ausgeführt ist, und wobei der RFID-Tag (6) an einer Innenseite des geschlossenen Antennenkörpers (11", 11''') an dem Schlitz (12, 12') des Antennenkörpers (11", 11''') angeordnet ist.

6. RFID-Transponder gemäß einem der vorstehenden Ansprüche, wobei der Schlitz (12,12') zumindest abschnittsweise geradlinig oder stetig gekrümmt verläuft und auch gegabelt ausgeführt ist.

7. RFID-Transponder gemäß einem der vorstehenden Ansprüche, wobei der RFID-Transponder an den beiden Anschlusspunkten sogenannte Anschlusspads (43,44) zum Anschluss des RFID-Chips (5) aufweist.

8. RFID-Transponder nach einem der vorstehenden Ansprüche, wobei die Länge des offenen Schlitzes (12') zwischen 6,75 und 7,75 cm liegt oder wobei die Länge des geschlossenen Schlitzes (12) zwischen 13,5 und 15,5 cm liegt.

9. RFID-Transponder nach einem der vorstehenden Ansprüche, wobei der Schlitz (12,12') mit einem Dielektrikum gefüllt ist

## Claims

1. RFID transponder comprising a slot antenna (1) and an RFID tag (6), wherein the slot antenna (1) has an electrically conductive antenna body (11, 11", 11''') with a closed slot (12), and wherein the RFID tag (6) has an RFID chip (5) and a coupling loop (4), wherein the coupling loop (4) provides two connecting points for connecting the RFID chip (5), and wherein these two connecting points are arranged in the direction of the main axis (H) with respect to one another, and wherein the main axis (H) of the RFID tag (6) is oriented parallel to the slot (12, 12') if the slot (12, 12') is embodied in a linear fashion at the position of the RFID tag (6), or wherein the main axis (H) is oriented tangentially with respect to the slot (12) if the slot (12) is embodied in a continuously curved fashion at the position of the RFID tag (6), and wherein the coupling loop has, perpendicularly with respect to the main axis (H), a centre axis (M) which is arranged centrally between two lateral boundaries (41, 42) of the coupling loop (4), **characterized in that**
the two lateral boundaries (41, 42), lying opposite one another, of the coupling loop are additionally distinguished by the fact that they are each at the largest possible distance (d) from the centre axis (M), wherein the RFID tag (6) is arranged with the centre axis (M) of its coupling loop (4) on a lateral region of the closed slot (12), wherein said lateral region is located between a third position (P3) and a fourth position (P4) on the closed slot (12), wherein the distance (E3) of the third position (P3) from one of the closed ends (121) along the slot (12) is at least 3/16 of the length (L2) of the closed slot (12), and wherein the distance (E4) of the fourth position (P4) from the same closed end (121) of the slot (12) along the slot (12) is at maximum 5/16 of the length (L2) of the closed slot (12).

2. RFID transponder according to Claim 1, wherein the coupling loop (4) has, perpendicularly with respect to its centre axis (M), a main axis (H), and in the direction of this main axis (H) a length which is less than or equal to 1/6 of the length (L2) of the closed slot (12).

3. RFID transponder comprising a slot antenna (1') and the RFID tag (6), wherein the slot antenna has an electrically conductive antenna body (11') with an open slot (12'), wherein the open slot (12') is distinguished by the fact that it has an open end (122') and a closed end (121'), and wherein the RFID tag (6) has the RFID chip (5) and the coupling loop (4), wherein the coupling loop (4) provides two connecting points for connecting the RFID chip (5), and wherein these two connecting points are arranged in the direction of the main axis (H) with respect to one another, and wherein the main axis (H) of the RFID tag (6) is oriented parallel to the slot (12, 12') if the slot (12, 12') is embodied in a linear fashion at the position of the RFID tag (6), or wherein the main axis (H) is oriented tangentially with respect to the slot (12) if the slot (12) is embodied in a continuously curved fashion at the position of the RFID tag (6), and wherein the coupling loop has, perpendicularly with respect to the main axis (H), a centre axis (M) which is arranged centrally between two lateral boundaries (41, 42) of the coupling loop (4),
**characterized in that** the two lateral boundaries (41, 42) of the coupling loop which lie opposite one another are additionally distinguished by the fact that they are each at the largest possible distance (d) from the centre axis (M), wherein the RFID tag (6) is arranged with the centre axis (M) of its coupling loop (4) at a central region of the open slot (12'), wherein said central region is defined by its boundaries, specifically by a first position (P1) and a second position (P2) which are each at a first distance (E1) from the closed end (121') or from the open end (122') of the slot (12'), wherein this first distance (E1) is greater than 3/8 of the length (L) of the open slot (12').

4. RFID transponder according to Claim 3, wherein the coupling loop (4) has, in the direction of its main axis (H) which is located perpendicularly with respect to the central axis (M), a length which is less than or equal to 1/3 of the length (L1) of the open slot (12').

5. RFID transponder according to one of the preceding claims, **characterized in that** the antenna body (11", 11''') is embodied in a bent or curved fashion and is closed, that is to say is embodied, for example, as a pipe or a closed square profile, and wherein the RFID tag (6) is arranged on an inner side of the closed antenna body (11", 11''') on the slot (12, 12') of the antenna body (11", 11''').

6. RFID transponder according to one of the preceding claims wherein at least in certain sections the slot (12, 12') is embodied in a linear or continuously curved fashion and is also forked.

7. RFID transponder according to one of the preceding claims, wherein the RFID transponder has at the two connecting points what are referred to as connecting pads (43, 44) for connecting the RFID chip (5).

8. RFID transponder according to one of the preceding claims, wherein the length of the open slot (12') is between 6.75 and 7.75 cm, or wherein the length of the closed slot (12) is between 13.5 and 15.5 cm.

9. RFID transponder according to one of the preceding claims, wherein the slot (12, 12') is filled with a dielectric.

## Revendications

1. Transpondeur RFID, comprenant une antenne à fentes (1) et une étiquette RFID (6), l'antenne à fentes (1) possédant un corps d'antenne (11, 11", 11''') électriquement conducteur avec une fente fermée (12), et l'étiquette RFID (6) possédant une puce RFID (5) et une boucle de couplage (4), la boucle de couplage (4) prévoyant deux points de raccordement destinés au raccordement de la puce RFID (5), et ces deux points de raccordement étant disposés l'un par rapport à l'autre dans la direction de l'axe principal (H), et l'axe principal (H) de l'étiquette RFID (6) étant orienté parallèlement à la fente (12, 12'), dans le cas où la fente (12, 12') est réalisée de manière rectiligne à la position de l'étiquette RFID (6), ou l'axe principal (H) étant orienté tangentiellement à la fente (12), dans le cas où la fente (12) est réalisée avec une courbure constante à la position de l'étiquette RFID (6), et la boucle de couplage possédant perpendiculairement à l'axe principal (H) un axe central (M) qui est disposé au centre entre deux délimitations latérales (41, 42) de la boucle de couplage (4), **caractérisé en ce que** les deux délimitations latérales (41, 42) mutuellement opposées de la boucle de couplage se caractérisent en plus **en ce qu'**elles présentent respectivement le plus grand écart possible (d) par rapport à l'axe central (M), l'étiquette RFID (6) étant disposée avec l'axe central (M) de sa boucle de couplage (4) au niveau d'une zone latérale de la fente fermée (12), ladite position latérale se trouvant entre une troisième position (P3) et une quatrième position (P4) au niveau de la fente fermée (12), la distance (E3) entre la troisième position (P3) et l'une des extrémités fermées (121) le long de la fente (12) étant au moins égale à 3/16 de la longueur (L2) de la fente fermée (12) et la distance (E4) entre la quatrième position (P4) et la même extrémité fermée (121) de la fente (12) de long de la fente (12) étant au maximum égale à 5/16 de la longueur (L2) de la fente fermée (12).

2. Transpondeur RFID selon la revendication 1, la boucle de couplage (4) possédant un axe principal (H) perpendiculaire à son axe central (M) et, dans la direction de cet axe principal (H), une longueur qui est inférieure ou égale à 1/16 de la longueur (L2) de la fente fermée (12).

3. Transpondeur RFID, comprenant une antenne à fentes (1') et l'étiquette RFID (6), l'antenne à fentes possédant un corps d'antenne (11') électriquement conducteur avec une fente ouverte (12'), la fente ouverte (12') étant **caractérisée en ce qu'**elle possède une extrémité ouverte (122') et une extrémité fermée (121'), et l'étiquette RFID (6) possédant la puce RFID (5) et la boucle de couplage (4), la boucle de couplage (4) prévoyant deux points de raccordement destinés au raccordement de la puce RFID (5), et ces deux points de raccordement étant disposés l'un par rapport à l'autre dans la direction de l'axe principal (H), et l'axe principal (H) de l'étiquette RFID (6) étant orienté parallèlement à la fente (12, 12'), dans le cas où la fente (12, 12') est réalisée de manière rectiligne à la position de l'étiquette RFID (6), ou l'axe principal (H) étant orienté tangentiellement à la fente (12), dans le cas où la fente (12) est réalisée avec une courbure constante à la position de l'étiquette RFID (6), et la boucle de couplage possédant perpendiculairement à l'axe principal (H) un axe central (M) qui est disposé au centre entre deux délimitations latérales (41, 42) de la boucle de couplage (4), **caractérisé en ce que** les deux délimitations latérales (41, 42) mutuellement opposées de la boucle de couplage se caractérisent en plus **en ce qu'**elles présentent respectivement le plus grand écart possible (d) par rapport à l'axe central (M), l'étiquette RFID (6) étant disposée avec l'axe central (M) de sa boucle de couplage (4) au niveau d'une zone centrale de la fente ouverte (12'), ladite zone centrale étant définie par ses limites, à savoir par une première position (P1) et une deuxième position (P2), lesquelles sont respectivement espacées d'une première distance (E1) de l'extrémité fermée (121') ou de l'extrémité ouverte (122') de la fente (12'), cette première distance (E1) étant supérieure à 3/8 de la longueur (L1) de la fente ouverte (12').

4. Transpondeur RFID selon la revendication 3, la boucle de couplage (4) possédant, dans la direction de son axe principal (H) perpendiculaire à son axe central (M), une longueur qui est inférieure ou égale à 1/3 de la longueur (L1) de la fente ouverte (12').

5. Transpondeur RFID selon l'une des revendications précédentes, **caractérisé en ce que** le corps d'antenne (11", 11''') est de configuration coudée ou courbée et fermé, c'est-à-dire réalisé par exemple sous la forme d'un tube ou d'un profilé quadrilatéral fermé, et l'étiquette RFID (6) est disposée sur un côté intérieur du corps d'antenne (11", 11''') fermé au niveau de la fente (12, 12') du corps d'antenne (11", 11''').

6. Transpondeur RFID selon l'une des revendications précédentes, **caractérisé en ce que** la fente (12, 12'), au moins dans certaines portions, s'étend de manière rectiligne ou avec une courbure constante et elle est également réalisée fourchue.

7. Transpondeur RFID selon l'une des revendications précédentes, le transpondeur RFID possédant aux deux points de raccordement des pastilles dites de raccordement (43, 44) destinées au raccordement de la puce RFID (5).

8. Transpondeur RFID selon l'une des revendications précédentes, la longueur de la fente ouverte (12') étant comprise entre 6,75 et 7,75 cm ou la longueur de la fente fermée (12) étant comprise entre 13,5 et 15,5 cm.

9. Transpondeur RFID selon l'une des revendications précédentes, la fente (12, 12') étant remplie d'un diélectrique.
